# NEW EUROPEAN PATENT SPECIFICATION

(11) **EP 0 551 277 B2**
(45) Date of publication and mention of the opposition decision: **09.03.2005**
(45) Mention of the grant of the patent: 15.01.1997
(21) Application number: 91912554.2
(22) Date of filing: 21.06.1991
(51) Int. Cl.: C08F 4/76, C08F 10/00

(54) **ALUMINUM-FREE MONOCYCLOPENTADIENYL METALLOCENE CATALYSTS FOR OLEFIN POLYMERIZATION**
ALUMINIUMFREIE MONOCYCLOPENTADIENYL-METALLOCENKATALYSATOREN FÜR OLEFINPOLYMERISATION
CATALYSEURS EN ALLIAGE ORGANOMETALLIQUE DE MONOCYCLOPENTADIENYLE DEPOURVU D'ALUMINIUM DESTINES A LA POLYMERISATION D'OLEFINES

(30) Priority: 22.06.1990 US 542236
(43) Date of publication of application: 21.07.1993
(60) Divisional application: 95200997.5
(73) Proprietor: ExxonMobil Chemical Patents Inc., Linden, NJ 07036-0710 (US)
(72) Inventor: CANICH, JoAnn, Marie, Houston, TX 77058 (US); HLATKY, Gregory, George, Houston, TX 77062 (US); TURNER, Howard, William, Houston, TX 77059 (US)
(74) Representative: UEXKÜLL & STOLBERG
(86) International application number: PCT/US1991/004390
(87) International publication number: WO 1992/000333

(56) References cited:
- EP-A- 0 416 815
- EP-A- 0 421 659
- US-A- 5 470 927
- Journal of Organometallic Chemistry, 472, 1994, pp. 39-41
- Organometallics, 1995, 14, pp. 3129-3131
- H.R. Christen "Grundlagen der Organischen Chemie", Salle & Sauerlaender, 1989, p. 356

## Description

### FIELD OF THE lNVENTION

This invention relates to a catalyst system comprising certain transition metal compounds of the Group IV-B metals of the Periodic Table of elements and an ion-exchange activator compound; to a composition of matter for use as a catalyst and to a process using such catalyst system for the production of polyolefins, particularly polyethylene, polypropylene, and ethylene-α-olefin copolymers.

### BACKGROUND OF THE INVENTION

EP 277003 and EP 277004 disclose ionic metallocene based catalysts obtainable from bis(cyclopentadienyl) derivatives of a Group IV-B metal compound and reagents which will irreversibly react with the Group IV-B metal compound.

EP 129368 discloses monocyclopentadienyl Group IV-B metal compounds which form catalysts with alumoxane, which Group IV-B compounds may have halo ligands and include no heteroatom ligand bonded through the heteroatom to the metal.

EP 250601 (WO 8703887) discloses catalysts of bis(cyclopentadienyl) derivatives of Group IV-B metals and alumoxane which include heteroatom ligands bonded through the heteroatom to the metal. Monocycopentadienyl compounds are referred to generically in the claims. EP 250601 does not disclose a cocatalyst other than alumoxane and does not disclose monocyclopentadienyl compounds having a bridge between the heteroatom and the cyclopentadienyl ring.

EP 418044 discloses a range of catalysts comprising a monocyclopentadienyl transition metal compound and a non-coordinating compatible anion. Example 1 uses pentamethyl cyclopentadienyl titanium isopropoxide dimethyl which contains a heteroatom in combination with an alkyl ligand, EP 418044 does not disclose a transition metal compound which possesses both hydride or hydrocarbyl groups substituted on the transition metal and a bridge between the heteratom and the cyclopentadienyl ring.

It is amongst the aims of the invention to provide a catyalyst system which is active and produces polymers not containing an undesirable amount of catalyst residue (or ash content measured as the non-volatile aluminium and transition metal content).

Aluminum alkyl-free olefin polymerization catalysts derived from transition metal complexes containing fewer than two cyclopentadiene have been relatively unexplored. John Bercaw reported [Organometallics, 1990. 9, 867] the synthesis of a monocyclopentadienyl scandium polymerization catalyst, (Me₂Si(C₆Me₄)(N-Bu²)ScH(PMe₃)]₂. This neutral Group III catalyst has a low activity and is very expensive due to the high cost of scandium metal. It is also amongst the aims of the invention to prepare highly active, versatile, aluminum alkyl-free olefin polymerization catalysts derived from monocyclopentadienyl ligand systems.

### SUMMARY OF THE INVENTION

The ionic catalyst system provided in a first aspect of this invention is obtainable by combining a transition metal component from Group IV B of the Periodic Table of the Elements (CRC Handbook of Chemistry and Physics, 68th ed. 1987-1988) and an activator compound acting as an ion-exchange reagent which catalyst system may be employed in solution, slurry, gas phase or bulk phase polymerization procedure to produce a polyolefin of high weight average molecular weight and relatively narrow molecular weight distribution.

In general the Group IV-B transition metal component can be a polyalkyl or hydride complex containing fewer than two cyclopentadienyl groups.

The "Group IV-B transition metal component" of the mono-cyclopentadienyl catalyst system is represented by the general formula: 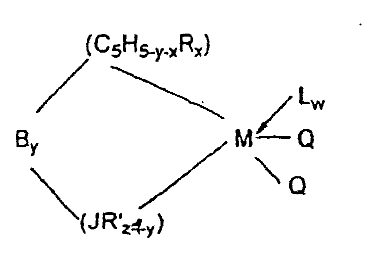 wherein:
M is Zr, Hf or Ti and is in its highest formal oxidation state (+4, d⁰ complex):
(C₅F_{5-y-x}Rₓ) is a cyclopentadienyl ring which is substituted with from zero to five substituent groups R, "x" is 0, 1, 2, 3, 4 or 5 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁-C₂₀ hydrocarbyl-substituted metalloid radicals wherein the metalloid is selected from the Group IV-A of the Periodic Table of Elements, and halogen radicals; or (C₅H_{5-y-x}Rₓ) is a cyclopentadienyl ring in which two adjacent R-groups are joined forming a C₄-C₂₀ ring to give a polycyclic cyclopentadienyl ligand such as indenyl and fluorenyl derivatives;
(JR'_{z-1-y}) is a heteroatom ligand in which J is an element with a coordination number of three from Group V-A or an element with a coordination number of two from Group VI-A of the Periodic Table of Elements, preferably nitrogen, phosphorus, oxygen or sultur, and each R' is, Independently a radical selected from a group consisting of C₁-C₂₀ hydrocarbyl radicals, substituted C₁-C₂₀ hydrocarbyl radicals wherein one or more hydrogen atoms is replaced by a halogen atom, and "z" is the coordination number of the element J;
each Q is independently, hydride, C₁-C₆₀ hydrocarbyl radicals, substituted hydrocarbyl radicals wherein one or more hydrogen atoms is replaced by an electron-withdrawing group or C₁-C₅₀ hydrocarbyl-substituted metalloid radicals wherein the metalloid is selected from the Group IV-A of the Period Table of Elements, provided that where any Q is a hydrocarbyl such Q is different from (C₅H_{5-y-x}Rₓ), or both Q together are an alkylidene, olefin, acetylene or a cyclometallated hydrocarbyl.
"y" is 0 or 1; when "y" is 1, B is a covalent bridging group containing a Group IV-A or V-A element such as, but not limited to, a dialkyl, alkylaryl or diaryl silicon or germanium radical, alkyl or aryl phosphine or amine radical, or a hydrocarbyl radical such as methylene or ethylene;
L is a neutral Lewis base such as diethylether, tetrahydrofuran, dimethylaniline, aniline, trimethylphosphine or n-butylamine; and "w" is a number from 0 to 3; L can also be a second transition metal compound of the same type such that the two metal centers M and M' are bridged by Q and Q', wherein M' has the same meaning as M and Q' has the same meaning as Q. Such compounds are represented by the formula:

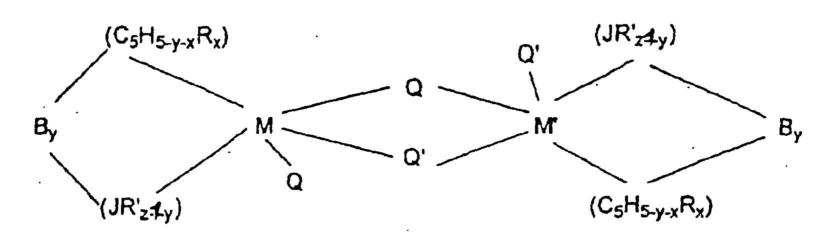

The second component is an activator compound for ion-exchange comprising a cation which will irreversibly react with at least one ligand contained in said Group IV-B metal compound and a noncoordinating anion which is bulky and labile and is a single coordination complex comprising a plurality of lipophilic radicals covalently coordinated to and shielding a central charge-bearing metal or metalloid core. Upon combination of the first and second components, the cation of the second component reacts with one of the ligands of the first component, thereby generating a composition of matter in a second aspect of the invention comprising an ion pair consisting of a Group IV-B metal cation with a format coordination number of 3 and a valence of +4 and the aforementioned anion, which anion is compatible with and non-coordinating toward the metal cation formed from the first component. Illustrative but not limiting examples of cations of the second component include Bronsted acids such as ammonium ions of reducible Lewis acids such as Ag⁺ or ferrocenium ions. The anion of the second compound stabilizes the Group IV-B metal cation complex without interfering with the Group IV-B metal cation's or its decomposition product's ability to function as a catalyst and is sufficiently labile to permit displacement by an olefin, diolefin or an acetylenically unsaturated monomer during polymerization.

Catalyst systems of the invention may be prepared by placing the Group IV B transition metal component and the ion-exchange component in common solution in a normally liquid alkane or aromatic solvent, which solvent is preferably suitable for use as a polymerization diluent for the liquid phase polymerization of an olefin monomer. Suitable catalysts can also be prepared by reacting the components and adsorbing on a suitable support material (inorganic oxides or polymers, for example) or by allowing the components to react on such support.

The invention also provides a process for the production of homo- and co-polyolefins comprising one or more unsaturated monomer(s) in the presence of the catalyst system.

A typical polymerization process of the invention such as for the polymerization or copolymerization of ethylene comprises the steps of contacting ethylene alone, or with other unsaturated monomers including C₃-C₂₀ α-olefins, C₅-C₂₀ diolefins, and/or acetylenically unsaturated monomers either alone or in combination with other olefins and/or other unsaturated monomers, with a catalyst comprising, in a suitable polymerization diluent, the Group IV-B transition metal component illustrated above; and the ion-exchange activator component in an amount to provide a molar transition metal to activator ratio of from 1:10 to 200:1 or more; and reacting such monomer in the presence of such catalyst system at a temperature of from -100°C to 300°C for a time of from 1 second to 10 hours to produce a polyolefin having a weight average molecular weight of from 1,000 or less to 5,000,000 or more and a molecular weight distribution of 1.5 or greater.

### DESCRIPTION OF THE PREFERRED EMBODIMENT

### Ionic Catalyst System - General Description

The polymerization process in a third aspect of this invention is practiced with that class of ionic catalysts prepared by combining at least two components. The first of these is a monocyclopentadienyl derivative of a Group IV-B metal compound containing at least one ligand which will combine with the second component or at least a portion thereof such as a cation portion thereof. The second component is an activator, ion-exchange compound comprising a cation which will irreversibly react with at least one ligand contained in said Group IV-B metal compound and a bulky, labile anion which is normally non-coordinating and stable. Upon combination of the first and second components, the cation of the second component reacts with one of the ligands of the first component, thereby generating an ion pair consisting of a Group IV-B metal cation with a formal coordination number of 3 and a valence of +4 and the aforementioned anion, which anion is compatible with and non-coordinating towards the metal cation formed from the first component. The anion of the second compound stabilizes the Group IV-B metal cation complex without interfering with the Group IV-B metal cation's or its decomposition product's ability to function as a catalyst and is sufficiently labile to permit displacement by an olefin, diolefin or an acetylenically unsaturated monomer during polymerization.

### A Catalyst Component

The Group IV-B transition metal component of the catalyst system is represented by the general formula: 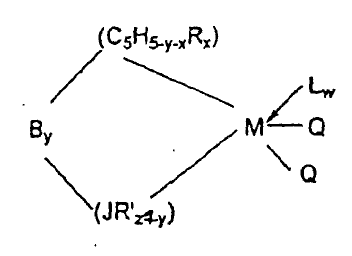 wherein:
M is Zr, Hf or Ti and is in its highest formal oxidation state (+4, d° complex);
(C₅H_{5-y-x}Rₓ) is a cyclopentadienyl ring which is substituted with from zero to five substituent groups R, "x" is 0, 1, 2, 3, 4 or 5 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁-C₂₀ hydrocarbyl-substituted metalloid radicals wherein the metalloid is selected from the Group IV A of the Periodic Table of Elements, and halogen radicals; or (C₅H_{5-y-x}Rₓ) is a cyclopentadienyl ring in which two adjacent R-groups are joined forming a C₄-C₂₀ ring to give a polycyclic cyclopentadienyl ligand such as indenyl and fluorenyl derivatives;
(JR'_{z-1-y}) is a heteroatom ligand in which J is an element with a coordination number of three from Group V-A or an element with a coordination number of two from Group VI-A of the Periodic Table of Elements, preferably nitrogen, phosphorus, oxygen or sulfur with nitrogen being preferred, and each R' is, independently a radical selected from a group consisting of C₁-C₂₀ hydrocarbyl radicals, substituted C₁-C₂₀ hydrocarbyl radicals wherein one or more hydrogen atoms is replaced by a halogen atom, and "2" is the coordination number of the element J;
each Q is independently, hydride, C₁-C₅₀ (preferably C₁-C₂₀) hydrocarbyl radicals, substituted hydrocarbyl radicals wherein one or more hydrogen atoms is replaced by an electron-withdrawing group, or C₁-C₅₀ (preferably C₁-C₂₀) hydrocarbyl-substituted metalloid radicals wherein the metalloid is selected from the Group IV-A of the Periodic Table of Elements, provided that where any Q is a hydrocarbyl such Q is different from (C₅H_{5-y-x}Rₓ), or both Q together are alkylidene, olefin, acetylene or a cyclometallated hydrocarbyl;
"y" is 0 or 1; when "y" is 1, B is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene or ethylene. Examples of the B group which are suitable as a constituent group of the Group IV B transition metal component of the catalysl system are identified in Column 1 of Table 1 under the heading "B".
L is a neutral Lewis base such as diethylether, tetrahydrofuran, dimethylaniline, aniline, trimethylphosphine, n -butylamine and "w" is a number from 0 to 3; L can also be a second transition metal compound of the same type such that the two metal centers M and M' are bridged by Q and Q', wherein M' has the same meaning as M and Q' has the same meaning as Q. Such compounds are represented by the formula:

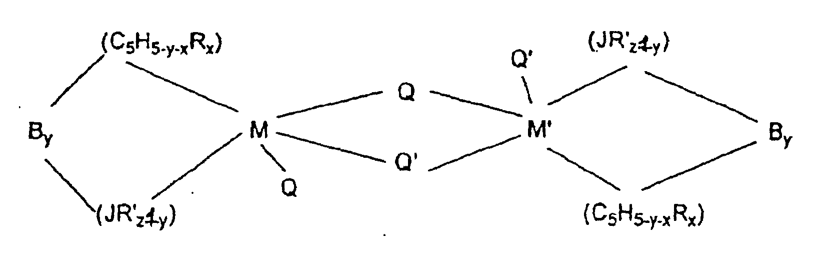

Exemplary hydrocarbyl radicals for the Q are methyl, ethyl, propyl, butyl, amyl, isoamyl, hexyl, Isobutyl, heptyl, octyl, nonyl, decyl, cetyl, 2-ethylhexyl or phenyl, with methyl being preferred. Exemplary substituted hydrocarbyl radicals include trifluoromethyl, pentafluorphenyl, trimethylsilylmethyl, and trimethoxysilylmethyl. Exemplary hydrocarbyl substituted metalloid radicals include trimethylsilyl, trimethylgermyl or triphenylsilyl. Exemplary alkyldiene radicals for both Q together are methylidene, ethylidene and propylidene. Examples of the Q group which are suitable as a constituent group or element of the Group IV B transition metal component of the catalyst system are identified in Column 4 of Table 1 under the heading "Q".

Suitable hydrocarbyl and substituted hydrocarbyl radicals, which may be substituted as an R group for at least one hydrogen atom in the cyclopentadienyl ring, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Suitable organometallic radicals, which may be substituted as an R group for at least one hydrogen atom in the cyclopentadienyl ring, include trimethylsilyl, triethylsilyl, ethyldimethylsilyl, methyldiethylsilyl, triphenylgermyl and trimethylgermyl. Examples of cyclopentadienyl ring groups (C₅H_{5-y-x}Rₓ) which are suitable as a constituent group of the Group IV-B transition metal component of the catalyst system are identified in Column 2 of Table 1 under the heading (C₅H_{5-y-x}Rₓ).

Suitable hydrocarbyl and substituted hydrocarbyl radicals, which may be substituted as an R' group for at least one hydrogen atom in the heteroatom J ligand group, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Examples of heteroatom ligand groups (JR'_{z-1-y}) which are suitable as a constituent group of the Group IV B transition metal component of the catalyst system are identified in Column 3 of Table 1 under the heading (JR'_{z-1-y}).

Table 1 depicts representative constituent moieties for the "Group IV-B transition metal component", the list is for illustrative purposes only and should not be construed to be limiting in any way. A number of final components may be formed by permuting all possible combinations of the constituent moieties with each other. Illustrative compounds are: dimethylsilyltetramethylcyclopentadienyl-tert-butytamido zirconium dimethyl, dimethylsilyltetramethylcyclopentadienyltert-butylamido hafnium diethyl, dimethylsilyl-tert-butylcyclopentadienyl-tert-butylamido zirconium dihydride, dimethylsilyl-tert-butylcyclopentadienyl-tert-butylamido hafnium diphenyl, dimethylsilyltrimethylsilyclopentadienyl-tert-butylamido zirconium dihydride, dimethylsilyltetramethylcyclopentadienyl -phenylamido litanium dimethyl, dimethylsilyltetramethylcyclopentadienyl -phenylamido hafnium ditolyl, methylphenylsilyltetramethylcyclopentadienyl-tert-butylamido zirconium dihydride, methylphenylsilyltetramethylcyclopentadienyl-tert-butylamido hafnium dimethyl, dimethylsilylfluorenyl-cyclohexylamide titanium dimethyl, diphenylgermylindenyl-t-butyl phosphido dihydride, methylphenylsilyltetramethylcyclopentadienyl-tert-butylamido hafnium dimethyl, dimethylsilyltetramethylcyclopentadienyl-p-n-butylphenylamido zirconium dihydride, dimethylsilyltetramethylcyclopentadienyl-p-n-butylphenylamido hafnium ditrimethylsilyl. For illustrative purposes, the above compounds and those permuted from Table 1 do not include the neutral Lewis base ligand (L). The conditions under which complexes containing neutral Lewis base ligands such as ether or those which form dimers is determined by the steric bulk of the ligands about the metal center. Similarly, due to the decreased steric bulk of the trimethylsilylcyclopentadienyl group in [Me₂Si(Me₃SiC₅H₃)(N-t-Bu)ZrH₂]₂ versus that of the tetramethylcyclopentadienyl group in Me₂Si(Me₄C₅)(N-t-Bu)-ZrH₂, the former compound is dimeric and the latter is not.

Generally the bridged species of the Group IV-B transition metal compound ('y'=1) are preferred. A preferred method of preparing these compounds is by reacting a cyclopentadienyl lithium compound with a dihalo-compound whereupon a lithium halide salt is liberated and a monohalo substituent becomes covalently bound to the cyclopentadienyl compound. The so substituted cyclopentadienyl reaction product is next reacted with a lithium salt of a phosphide, oxide, sulfide or amide (for the sake of illustration, a lithium amide) whereupon the halo element of the monohalo substituent group of the reaction product reacts to liberate a lithium halide salt and the amine moiety of the lithium amide salt becomes covalently 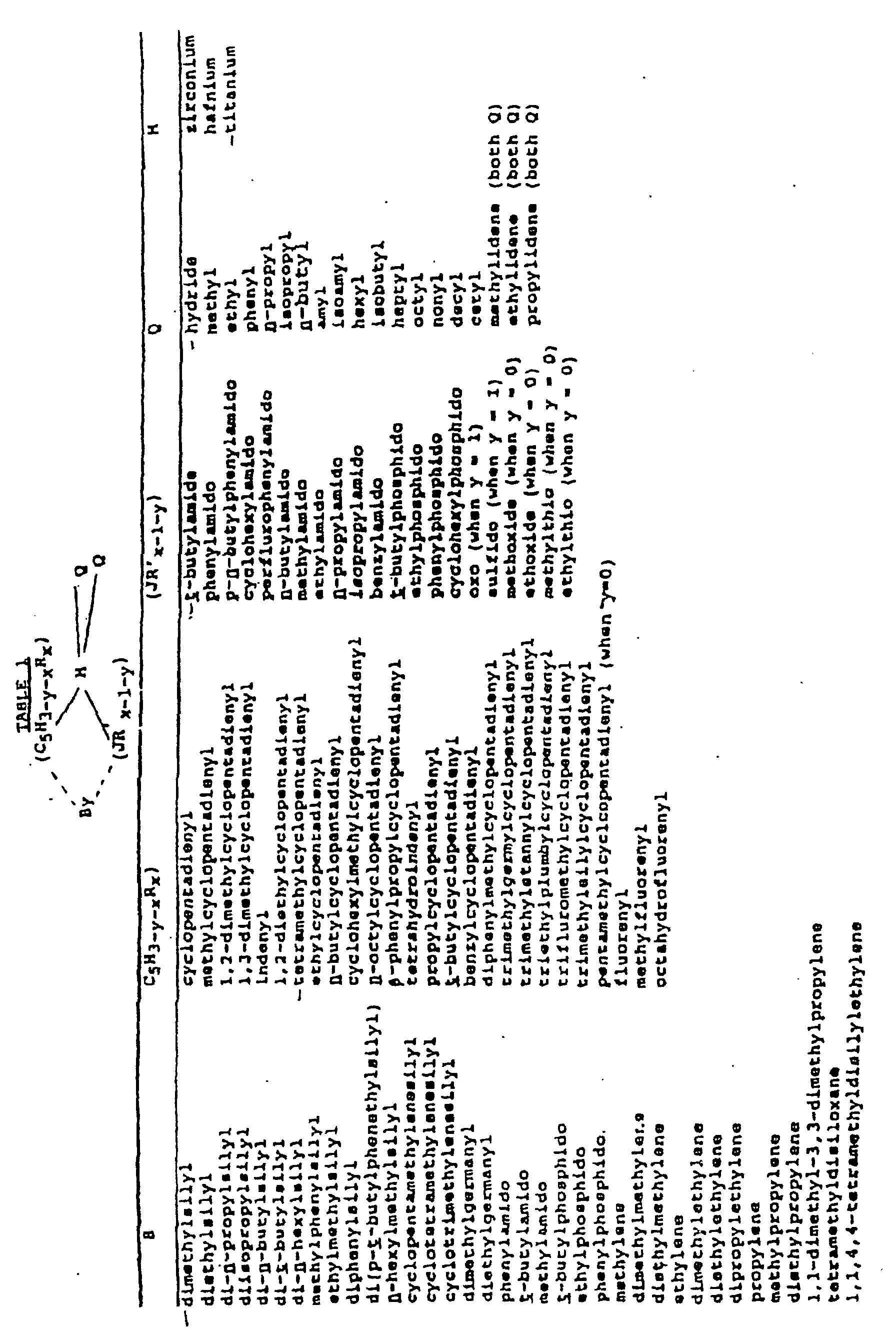 bound to the substituent of the cyclopentadienyl reaction product. The resulting amine derivative of the cyclopentadienyl product is then reacted with an alkyl lithium reagent whereupon the labile hydrogen atoms, at the carbon atom of the cyclopentadienyl compound and at the nitrogen atom of the amine moiety covalently bound to the substituent group, react with the alkyl of the lithium alkyl reagent to liberate the alkane and produce a dilithium salt of the cyclopentadienyl compound. Thereafter the bridged species of the Group IV-B transition metal compound is produced by reacting the dilithium salt cyclopentadienyl compound with a Group IV-B transition metal preferably a Group IV-B transition metal halide. This procedure yields the dichloro-derivative of the monocyclopentadienyl-amido Group IV-B-compound. The dichloride complex is then converted into the appropriate hydrocarbyl derivative using the corresponding Grignard, lithium, sodium or potassium salt of the hydrocarbyl ligand. The procedures used are analogous to those developed for alkylating the Group IV-B metallocene complexes (i.e., the biscyclopentadienyl systems).

Unbridged species of the Group IV-B transition metal compound can be prepared from the reaction of a cyclopentadienyl lithium compound and a lithium salt of an amine with a Group IV-B transition metal halide.

Suitable, but not limiting, Group IV-B transition metal compounds which may be utilized in the catalyst system of this invention include those bridged species ("y"=1) wherein the B group bridge is a linear, branched or cyclic alkylene group having from 1 to 6 carbon atoms, an alkyl substituted silaalkylene group having from 1 to 2 silicon atoms in place of carbon atoms in the bridge or a S₁-S₂ alkyl substituted silanylene group, and is preferably a dialkyl, diaryl or alkylaryl silane, or methylene or ethylene. Examples of the more preferred species of bridged Group IV-B transition metal compounds are dimethylsilyl, methylphenylsilyl, diethylsilyl, ethylphenylsilyl, diphenylsilyl, ethylene or methylene bridged compounds. Most preferred of the bridged species are dimethylsilyl, diethylsilyl and methylphenylsilyl bridged compounds.

Suitable Group IV-B transition metal compounds which are illustrative of the unbridged ("y"=0) species which may be utilized in the catalyst systems of this invention are exemplified by pentamethylcyclopentadienyldi-t-butylphosphinodimethyl hafnium; pentamethylcyclopentadienyldi-t-butyl-phosphinomethylethyl hafnium; cyclopentadienyl-2-methyl-butoxide dimethyl titanium.

To illustrate members of the Group IV-B transition metal is component, select any combination of the species in Table 1. An example of a bridged species would be dimethylsilyl-cyclopentadienyl-t-butylamidodimethyl zirconium: an example of an unbridged species would be cyclopentadienyldi-t-butylamidodihydride zirconium.

### B. The Activator Component

Compounds useful as an activator component in the preparation of the catalyst used in the process of this invention will comprise a cation, which may be a Bronsted acid capable of donating a proton, and an anion which is normally compatible, noncoordinating, bulky, capable of stabilizing the active catalyst species (the Group IV-B cation) which is formed when the two compounds are combines and which is sufficiently labile to be displaced by olefinic, diolefinic and acetylenically unsaturated substrates or other neutral Lewis bases such as ethers, nitriles and the like. Such compatible non-coordinating anions have been disclosed in our European Patent Application 277,004 as anionic single coordination complexes comprising a plurality of lipophilic radicals covalently coordinated to and shielding a central charge-bearing metal or metalloid core.

In general, activator compounds containing single anionic coordination complexes which are useful in this invention may be represented by the following general formula:

5. [(L-'H)⁺]_{d}[(M')^{m+}Q₁Q₂...Qₙ]^{d-}

wherein:
L' is a neutral Lewis base;
H is a hydrogen atom;
[L'-H] is a Bronsted acid;
M' is a metal or metalloid selected from the Groups subtended by Groups V-B to V-A of the Periodic Table of the Elements; i.e.. Groups V-B, VI-B, VII-B, VIII, I-B, II-B, III-A, IV-A, and V-A;
Q₁ to Qₙ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of Q₁ to Qₙ may be a halide radical, the remaining Q₁ to Qₙ being, independently, selected from the foregoing radicals;
m is an integer from 1 to 7;
n is an integer from 2 to 8; and n - m = d.

As indicated above, any metal or metalloid capable of forming an anionic complex which is stable in water may be used or contained in the anion of the second compound. Suitable metals, then, include, but are not limited to, aluminum, gold and platinum. Suitable metalloids include, but are not limited to, boron, phosphorus and silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

The preferred activator compounds comprising boron may be represented by the following general formula:

5A [(L'-H)⁺[BAr₁Ar₂X₃X₄]⁻

wherein:
L' is a neutral Lewis base;
H is a hydrogen atom;
[L'-H]⁺ is a Bronsted acid;
B is boron in a valance state of 3;
Ar₁ and Ar₂ are the same or different aromatic or substituted-aromatic hydrocarbon radicals containing from 6 to 20 carbon atoms and may be linked to each other through a stable bridging group; and
X₃ and X₄ are radicals selected, independently, from the group consisting of hydride radicals, halide radicals, with the proviso that X₃ and X₄ will not be halide at the same time, hydrocarbyl radicals containing from 1 to 20 carbon atoms, substituted-hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is selected from Group IV-A of the Periodic Table of the Elements.

In general, Ar₁ and Ar₂ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents on the substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals such as those useful as X₃ and X4. The substituent may be ortho, meta or para, relative to the carbon atoms bonded to the boron atom. When either or both X₃ and X4 are a hydrocarbyl radical, each may be the same or a different aromatic or substituted-aromatic radical as are Ar₁ and Ar₂, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. X₃ and X₄ may also, independently, be alkoxy or dialkylamido radicals wherein the alkyl portion of said alkoxy and dialkylamido radicals contain from 1 to 20 carbon atoms, hydrocarbyl radicals and organometalloid radicals having from 1 to 20 carbon atoms. As indicated above, Ar₁ and Ar₂ may be linked to each other. Similarly, either or both of Ar₁ and Ar₂ could be linked to either X₃ or X₄. Finally, X₃ or X₄ may also be linked to each other through a suitable bridging group.

Illustrative, but not limiting, examples of boron compounds which may be used as an activator component in the preparation of the improved catalysts of this invention are trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-totyl)boron, tributylammonium tetra(pentafluorophenyl)boron, tripropylammonium-tetra(o,p-dimethylphenyl)boron, tributylammonium tetra(m,m-dimethylphenyl)boron, tributylammonium tetra(p-tri-fluoromethylphenyl)boron and tri(n-butyl)ammonium tetra(o-tolyl)boron; N,N-dialkyl anilinium salts such as N,N-dimethylanilinium tetra(pentafluorophenyl)boron, N,N-diethylanilinium tetra(phenyl)boron, N,N-2,4,6-pentamethylanilinium and tetra(phenyl)boron; dialkyl ammonium salts such as di(i-propyl)ammonium tetra(pentafluorophenyl) boron and dicyclohexylammonium tetra(phenyl)boron; and triaryl phosphonium salts such as triphenylphosphonium tetra(phenyl)boron, tri(methylphenyl)-phosphonium tetra(phenyl)boron, tri(dimethylphenyl)phosphonium and tetra(phenyl)boron.

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations.

### Process of Catalyst Preparation

The catalyst systems employed in the method of the invention comprise a complex formed upon admixture of the Group IV-B transition metal component with the activator component. The catalyst system may be prepared by addition of the requisite Group IV-B transition metal and activator components to an inert solvent in which olefin polymerization can be carried out by a solution polymerization procedure.

The catalyst system may be conveniently prepared by placing the selected Group IV-B transition metal component and the selected activator component, in any order of addition, in an alkane or aromatic hydrocarbon solvent - preferably toluene. The catalyst system may be separately prepared, in concentrated form, and added to the polymerization diluent in a reactor. Or, if desired, the components of the catalyst system may be prepared as separate solutions and added to the polymerization diluent in reactor, in appropriate ratios, as is suitable for a continuous liquid polymerization reaction procedure. Alkane and aromatic hydrocarbons suitable as solvents for formation of the catalyst system and also as a polymerization diluent are exemplified by, but are not necessarily limited to, straight and branched chain hydrocarbons such as isobutene, butane, pentane, hexane, heptane and octane, cyclic and alicyclic hydrocarbons such as cyclohexane, cycloheptane, methylcyclohexane and methylcycloheptane, and aromatic and alkyl-substituted aromatic compounds such as benzene, toluene and xylene. Suitable solvents also include liquid olefins which may act as monomers or comonomers including ethylene, propylene, butene and 1-hexene.

In accordance with this invention optimum results are generally obtained wherein the Group IV-B transition metal compound is present in the polymerization diluent in concentration of from 0.01 to 1.0 millimoles/liter of diluent and the activator component is present in an amount to provide a molar ratio of the transition metal to activator component from 1:1 to 200:1. Sufficient solvent should be employed so as to provide adequate heat transfer away from the catalyst components during reaction and to permit good mixing.

The catalyst system ingredients -- that is, the Group IV-B transition metal and activator components, and polymerization diluent can be added to the reaction vessel rapidly or slowly. The temperature maintained during the contact of the catalyst components can vary widely, such as, for example, from -10° to 300°C. Greater or lesser temperatures can also be employed. Preferably, during formation of the catalyst system, the reaction is maintained within is a temperature of from 25° to 100°C, most preferably about 25°C.

At all times, the individual catalyst system components, as well as the catalyst system once formed, are protected from oxygen and moisture. Therefore, the reactions are performed in an oxygen and moisture free atmosphere and, where the catalyst system is recovered separately, it is recovered in an oxygen and moisture free atmosphere. Preferably, therefore, the reactions are performed in the presence of an inert dry gas such as, for example, helium or nitrogen.

### The Catalyst System: Characterization and Properties of the Active Site

The reaction of the two catalyst components can be viewed as a simple acid-base reaction where the G⁻-ligand bound to the transition metal center of (CN)MQ₂ (where (CN) = Cp and J-ligands) reacts with the cation of the second component, which may be acidic, [L'H⁺][A]⁻ (where A⁻ is the non-coordinating anion), to give the ionic catalyst [(CN) MQ⁺[A]⁺ and neutral biproducts Q-H and L'. The overall catalytic performance of the catalyst depends on the choice of metal, the specific (CN)-ligand set, the structure and stability of A-, and the coordinating ability of the cation or Lewis base L'. For conventional applications where a high productivity homopolymerization or random copolymerization catalyst is desired, the cation is a proton donor and the Q-ligand of the transition metal component is chosen so that: 1) the metal complex is easy to prepare and is low cost; 2) (CN)MQ₂ is sufficiently basic to deprotonate the acidic cation of the activator component; and 3) Q-H is an unreactive biproduct such as an alkane so that the activation reaction is irreversible. For a particular (CN)M-system the L' and A- portions of the activator component "tune" the stability and overall performance of the catalyst system. The ability of L' and A- to modify the behavior of a catalyst site increases the versatility of the polymerization system which is an important advantage over conventional methods of activation (e.g. methylalumoxane, and other aluminum alkyl cocatalysts).

In general, and while most transition metal components identified above may be combined with most activator components identified above to produce an active olefin polymerization catalyst, it is important for continuity of the polymerization operations that either the metal cation initially formed from the first component or a decomposition product thereof be stable. It is also important that the anion of the activator compound be stable to hydrolysis when an ammonium salt is used. Further, it is important that the positive charge of the activator component be sufficient, relative to the metal component, to facilitate the needed cation, e.g., proton transfer. Activator compounds containing aryl-ammonium salts such as N, N-dimethylantlium are more acidic than trialkylammonium salts and therefore are useful with a wider variety of transition metal components. The basicity of the metal complex must also be sufficient to facilitate the needed proton transfer. In general, transition metal compounds which can be hydrolysed by aqueous solutions can be considered suitable as metallocene components to form the catalysts described herein.

With respect to the combination of the transition metal component with the activator component to form a catalyst of this invention, it should be noted that the two compounds combined for preparation of the active catalyst must be selected so as to avoid transfer of a fragment of the anion to the metal cation, thereby forming a catalytically inactive species. This could be done by steric hindrance, resulting from substitutions on the Cp- and/or J-ligands of the first component, as well as substitutions on the non-coordinating anion.

As the amount and size of the substitutions on the transition metal components are reduced, more effective catalysis are obtained with activator compounds containing non-coordinating anions which are larger in size and more resistant to degradation. In the case where the non-coordinating anion is an anionic coordination complex, such as a tetraphenylboron derivative, substitutions on the phenyl rings can be used to prevent the transfer of a proton or an entire phenyl group from the anion to the metal. This can be accomplished by alkyl substitution in the ortho positions of the phenyl groups, or, more preferably, by perfluoro-substitutions on the anion. Thus, anionic coordination complexes containing perfluorophenyl-, trifluoromethylphenyl-, or bis-trifluormethylphenyl rings are preferred for this subgenus of activator components.

Several new compositions of matter have been identified using high field NMR spectroscopy. The reaction between Me₂Si(Me₄C₅) (N-t-Bu)ZrMe₂ and [DMAH][B(pfp)₄] (where DMAH = PhMe₂NH⁺ and pfp = C₆F₆) in d⁸-toluene produces a two phase system. The top layer is largely d⁸-toluene with only a very small amount of DMA (DMA - PhNMe₂) present. The lower layer contains the ionic catalyst and d⁸-toluene. The high field ¹³C NMR spectrum of the lower layer suggests the reaction proceeds to give the DMA-adduct as shown below.

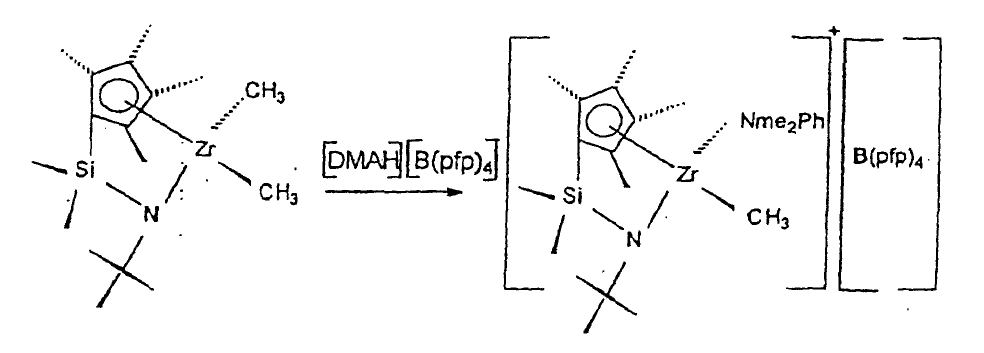

The NMR data clearly suggest that the amine is indeed coordinated to the zirconium atom, but that it is fluxional and probably has two orientations of coordination, most likely in the form of rotational isomers. The ionic catalysts species can be crystallized out at -40°C giving a pale powder. The solid state NMR spectrum of this material revealed amine coordination to the zirconium atom with more than one orientation. Addition of d⁶-thf (thf = tetrahydrofuran) to the catalyst solution or solid produces the d⁸-thf adduct, [Me₂Si(Me₄C₅)(N-t-Bu)ZrMe(d⁸-thf)ₓ][B)pfp)₄] and free DMA This was expected since d⁸-thf is a much stronger base than DMA.

lon-exchange activators with different basicities have also been investigated. An amine which is a stronger base than DMA, such as DMT (Me₂N-p-Me-Ph) provides complete coordination to the zirconium atom with no (fluxionality.

This catalyst was produced from the reaction of [DMTH][B(pfp)₄] with Me₂Si(Me₄C₅)(N-t-Bu)ZrMe₂. Very little, if any, free DMT was observed in the ¹³C NMR spectrum of the catalyst solution. The use of [Bu₃NH][B(pfp)₄] as the activator provided a more interesting result. It appears that when [n-Bu₃NH][B(pfp)₄] is reacted with Me₂Si(Me₄C₅)(N-t-Bu)ZrMe₂, the amine does not coordinate to the zirconium atom as illustrated in the equation below.

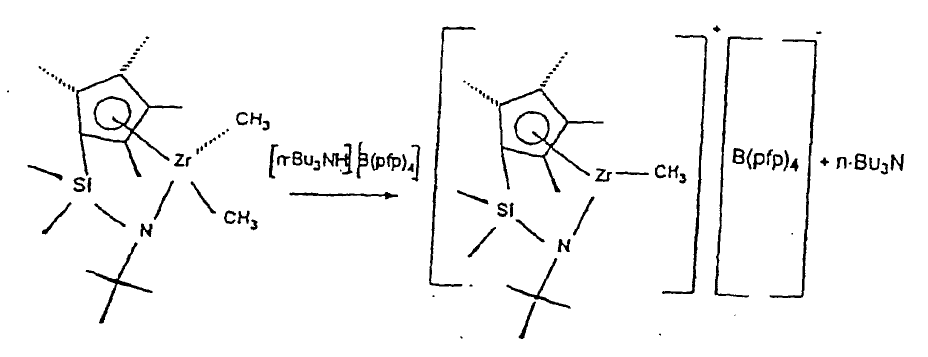

The fact that the amine is not coordinated to the metal is evidenced by the fact that the chemical shift of the amine signals are unchanged from free-amino. From a purely electronic point of view one would predict that Bu₃N would be a better ligand for the cationic metal center than DMA. The reverse is the case in this system indicating that steric forces dominate the coordination chemistry. The observation of two Cp-methyl signals and one Me₂Si-signal suggests that the cation is a symmetric three coordinate cation and that anion and the amine ligand to not coordination strongly with the metal, the Cp-centroid, and the silicon atom.

### Polymerization Process

In a preferred embodiment of the process of this invention the catalyst system is utilized in a liquid phase polymerization of an olefin monomer.

The liquid phase process comprises the steps of contacting an olefin monomer with the catalyst system in a suitable polymerization diluent and reacting said monomer in the presence of said catalyst system for a time and at a temperature sufficient to produce a polyolefin.

The monomer for such process may comprise ethylene alone, for the production of a homopolyethylene, or ethylene in combination with an α-olefin having 3 to 18 carbon atoms for the production of an ethylene-α-olefin copolymer. Conditions most preferred for the homo- or copolymerization of ethylene are those wherein ethylene is submitted to the reaction zone at pressures of from 0.0013 bar (0.019 psi) to 3445 bar (50,000 psi) and the reaction temperature is maintained at from -100°C to 300°C, preferably -10° to 220°C. The mole ratio of transition metal component to activator component is preferably from 1:1 to 200:1. The reaction time is preferably from 1 second to 1 hour.

Without limiting in any way the scope of the invention, one means for carrying out the process of the present invention is as follows: in a stirred-tank reactor liquid 1-butene monomer is introduced. The catalyst system is introduced via nozzles in either the vapor or liquid phase. Feed ethylene gas is introduced either into the vapor phase of the reactor, or sparged into the liquid phase as is well known in the art. The reactor contains a liquid phase composed substantially of liquid 1-butene together with dissolved ethylene gas, and a vapor phase containing vapors of all monomers. The reactor temperature and pressure may be controlled via reflux of vaporizing α-olefin monomer (autorefrigeration), as well as by cooling coils and jackets. The polymerization rate is controlled by the rate of catalyst addition, or by the concentration of catalyst. The ethylene content of the polymer product is determined by the ratio of ethylene to 1-butene in the reactor, which is controlled by manipulating the relative feed rates of these components to the reactor.

### Examples

In the examples which illustrate the practice of the invention the analytical techniques described below were employed for the analysis of the resulting polyolefin products. Molecular weight determinations for polyolefin products were made by Gel Permeation Chromatography (GPC) according to the following technique. Molecular weights and molecular weight distributions were measured using a Waters 150 gel permeation chromatograph equipped with a differential refractive index (DRI) detector and a Chromatix KMX-6 on-line light scattering photometer. The system was used at 135°C with 1,2,4-trichlorobenzene as the mobile phase. Shodex (Shows Denko America, Inc.) polystyrene get columns 802, 803, 804 and 805 were used. This technique is discussed in "Liquid Chromatography of Polymers and Related Materials III', J. Cazes, Editor, Marcel Dekker, 1981, p. 207 which is incorporated herein by reference. No corrections for column spreading were employed; however, data on generally accepted standards, e.g. National Bureau of Standards Polyethylene 1484 and anionically produced hydrogenated polyisoprenes (an alternating ethylene-propylene copolymer) demonstrated that such corrections on Mw/Mn (=MWD) were less than 0.05 units. Mw/Mn was calculated from elution time. The numberical analyses were performed using the commercially available Beckman/CIS customized LALLS software in conjunction with the standard Gel Permeation package, run on a HP 1000 computer.

The following examples are intended to illustrate specific embodiments of the invention and are not intended to limit the scope of the invention.

All procedures were performed under an inert atmosphere of helium or nitrogen. Solvent choices are often optional, for example, in most cases either pentane or 30-60 petroleum ether can be interchanged. The choice between tetrahydrofuran (thf) and 30 diethyl ether is more restricted, but in several reactions, either could be used. The lithiated amides were prepared from the corresponding amines and either n-BuLi or MeLi. Published methods for preparing LiHC₅Me₄ include C.M. Fendrick at at. Organometallics,3,819 (1984) and F.N. Kohler and K.H. Doll, Z Naturtorsch, 376, 144 (1982). Other lithiated substituted cyclopentadienyl compounds are typically prepared from the corresponding cyclopentadienyl ligand and BuLi or MeLi, or by reaction of MeLi with the proper solvene. ZrCl₄ and HlCl₄ were purchased from either Aldrich Chemical Company or Cerac. Amines, silane and lithium reagents were purchased from Aldrich Chemical Company or Petrarch Systems. Activator components were prepared by known literature methods.

### EXAMPLES

### Synthesis of Mono-Cyclcopentadienyl Complexes

### 1. Me₂Si(C₅Me₄)(N-t-Bu)ZrMe₂

Part 1. Me₄HC₅Li (10.0 g, 0.078 mol) was slowly added to a Me₂SiCl₂ (11.5 ml, 0.095 mol, in 225 ml of tetrahydrofuran (thf) solution). The solution was stirred for 1 hour to assure complete reaction. The thf solvent was then removed via a vacuum to is a cold trap held at -196°C. Pentane was added to precipitate out the LiCI. The mixture was filtered through Celite. The solvent was removed from the filtrate. Me₄HC₅SiMe₂Cl (15.34 g. 0.071 mol) was recovered as a pale yellow liquid.
Part 2. Me₄HC₅,SiMe₂Cl (10.0 g, 0.047 mol) was slowly added to a suspension of LiHN-t-Bu (3.68 g, 0.047 mol, ∼100 ml thf). The mixture was stirred overnight The thf was then removed via a vacuum to a cold trap held at -196°C. Petroleum ether (∼100 ml) was added to precipitate out the LiCI. The mixture was filtered through Celite. The solvent was removed from the filtrate. Me₂Si(Me₄HC₅)(HN-t-Bu) (11.14 g, 0.044 mol) was isolated as a pale yellow liquid.
Part 3. Me₂Si(Me₄HC₅)(HN-t-Bu) (11.14 g, 0.044 mol) was diluted with ∼100 ml Et₂O. MeLi (1.4 M, 64 ml. 0.090 mol) was slowly added. The mixture was allowed to stir for 1/2 hour after the final addition of MeLi. The ether was reduced in volume prior to filtering off the product. The product, [Me₂Si(Me₄C₅)(N-t-Bu)]Li₂, was washed with several small portions of ether, then vacuum dried.
Part 4. [Me₂Si(Me₄C₅)(N-t-Bu)]Li₂ (3.0 g, 0.011 mol) was suspended in ~ 150 ml Et₂O. ZrCl₄ (2.65 g, 0.011 mol) was slowly added and the resulting mixture was allowed to stir overnight. The ether was removed via a vacuum to a cold trap held at -196° C. Pentane was added to precipitate out the LiCI. The mixture was filtered through Celits twice. The pentane was significantly reduced in volume and the pale yellow solid was filtered off and washed with solvent. Me₂Si(Me₄C₅)(N-t-Bu)ZrCl₂ (1.07 g, 0.0026 mole) was recovered. Additional Me₂Si(Me₄C₅)(N-t-Bu)ZrCl₂ was recovered from the filtrate by repeating the recrystallization procedure. Total yield, 1.94 g, 0.0047 mol).
· Part 5. Me₂Si(C₅Me₄)(N-t-Bu)ZrMe₂ was prepared by adding a stoichiometric amound of MeLi (1.4 M in ether) to Me₂Si(C₅Me₄)(N-t-Bu)ZrCl₂ suspended in ether. The white solid was isolated in an 83% yield.

### 2. MePhSi(C₅Me₄)(N-t-Bu)HfMe₂

Part 1. MePhSiCl₂ (14.9 g. 0.078 mol) was diluted with ~250 ml of thf. Me₄C₅HLi (10.0 g. 0.078 mol) was slowly added as a solid. The reaction solution was allowed to stir overnight. The solvent was removed via a vacuum to a cold trap held at -196°C. Petroleum ether was added to precipitate out the LiCl. The mixture was filtered through Celite, and the pentane was removed from the filtrate. MePhSi(Me₄C₅H)Cl(20.8 g, 0.075 mol) was isolated as a yollow viscous liquid.
Part 2. LiHN-t-Bu (4.28 g. 0.054 mol) was dissolved in ∼100 ml of thf. MePhSi(Me₄C₅H)Cl (15.0 g, 0.054 mol) was added drop wise. The yellow solution was allowed to stir overnight. The solvent was removed via vacuum. Petroleum other was added to precipitate out the LiCl. The mixture was filtered through Celite, and the filtrate was evaporated down. MePhSi(Me₄C₅H)(NH-t-Bu) (16.6 g, 0.053 mol) was recovered as an extremely viscous liquid.
Part 3. MePhSi(Me₄C₅H)(NH-t-Bu) (16.6 g. 0.053 mol) was diluted with ~100 ml of ether. MeLi (76 ml, 0.106 mol, 1.4 M) was slowly added and the reaction mixture was allowed to stir for ~3 hours. The ether was reduced in volume, and the lithium sall was filtered off and washed with pentane producing 20.0 g of a pale yellow solid formulated as Li₂ [MePhSi(Me₄C₅)(N-t-Bu)]-3/4Et₂O.
Part 4. Li₂[MePhSi(Me₄C₅)(N-t-Bu)]·3/4Et₂O (5.00 g, 0.0131 mol) was suspended in ∼100 ml of Et₂O. HfCl₄ (4.20 g, 0.0131 mol) was slowly added and the reaction mixture was allowed to stir overnight. The solvent was removed via vacuum and petroleum ether was added to precipitate out the LiCl. The mixture was filtered through Celite. The filtrate was evaporated down to near dryness and filtered off. The off white solid was washed with petroleum ether. MePhSi (Me₄C₅(N-t-Bu)HfCf₂ was recovered (3.54 g. 0.0058 mole).
Part 5. MePhSi(Me₄C₅(N-t-Bu)HfMe₂ was prepared by adding a stoichiometric amount of HeLi (1.4 M in ether) to MePhSi(Me₄C₅(N-t-Bu)HfCl₂ suspended in ether. The white solid could be isolated in near quantitative yield.

### POLYMERIZATIONS

### Example 1.

A catalyst solution prepared from 19.7 mg of Me₂Si(Me₄C₅)(N-t-Bu)ZrMe₂ and 6 mg of [DMAH] [B(pfp)₄] in 20 mls of toluene was added to a 1 liter stainless-steel autoclave containing 400 mls of hexane. The reactor temperature was maintained at 40°C and stirred vigorously while ethylene was added at 6.2 bar (90 psi). After 30 minutes the reaction was stopped giving 30 grams of HDPE after work-up. The GPC analysis showed a bimodal distribution with modes centered at 900,000 and 2,000.

### Example 2.

A catalyst solution prepared from 28.6 mg of Me₂Si(Me₄C₅)(N-t-Bu)ZrMe₂ and 9 mg of [DMAH] [B(pfp)]₄ in 20 mls of toluene was added to a 1 liter stainless-steel autoclave containing 400 mls of hexane. The reactor temperature was set at 50°C and was stirred vigorously while 100 mls of butene and 4.1 bar (60 psi) of ethylene were added. Following the addition of butene and ethylene, an instantaneous increase in temperature to 90°C was observed. After 30 minutes the reaction was stopped, yielding 130 grams of a waxy ethylene-butene copolymer. GPC analysis showed a bimodal distribution with modes centered at 27,000 and 2,000 in approximately equal ratios. IR spectroscope showed the presence of butene in the copolymer.

### Example 3.

A catalyst solution prepared from 40 mg of MePhSi(C₅Me₄)(N-t-Bu)HfMe₂ and 11 mg of [DMAH][B(pfp₄] in 20 mls of toluene was added to a 1 liter autoclave containing 400 mls of hexane. The reactor temperature was set at 40°C, stirred vigorously and pressurized with ethylene 4.1 bar (90 psi) for 15 minutes. The reactor temperature increased from 40 to 97°C during the polymerization. The reactor was stopped and 98 grams of polyethylene was isolated having a Mw = 47.7K and a MWD = 3.0.

## Claims (Claims for the following Contracting State(s): AT, CH, LI, DK BE, DE, FR, GB, IT, NL, SE)

1. An ionic catalyst system for the production of polyolefins obtainable by combining:
A. a Group IV-B transition metal component of one of the two general formulae 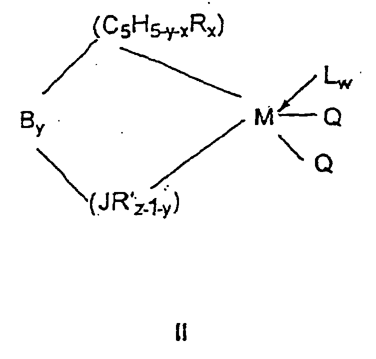 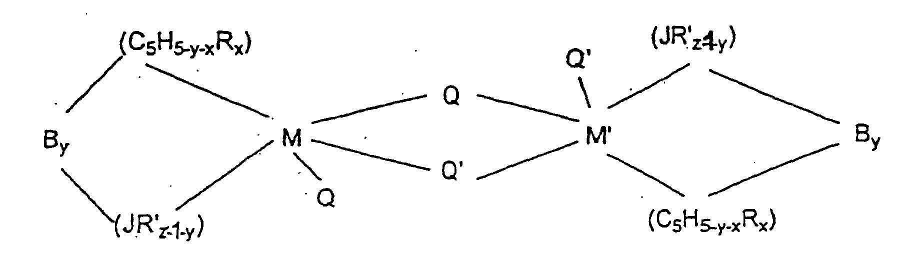 wherein
M is Zr, Hf or Ti and is in its highest formal oxidation state (+4, d° complex);
(C₅H_{5-y-x}Rₓ) is a cyclopentadienyl ring which is substituted with from zero to four radical R groups, "x" is 0, 1, 2, 3, or 4 denoting the degree of substitution, and each R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁ -C₂₀ hydrocarbyl-substituted metalloid radicals wherein the metalloid is selected from the Group IV-A of the Periodic the Group IV-A of the Periodic Table of Elements, and halogen radicals; or (C₅H_{5 -y-x}Rₓ) is a cyclopentadienyl ring in which two adjacent R-groups are joined forming a C₄-C₂₀ ring to give a polycyclic cyclopentadienyl ligand;
(JR'_{z-1-y}) is a heteroatom ligand in which J is an element in with a coordination number of three from Group V-A or an element with a coordination number of two from Group VI-A of the Periodic Table of Elements. and each R' is, independently a radical selected from a group consisting of C₁-C₂₀ hydrocarbyl radicals. substituted C₁-C₂₀ hydrocarbyl radicals wherein one or more hydrogen atoms is replaced by a halogen atom, and "z" is the coordination number of the element J;
each Q is independently, hydride, C₁-C₅₀ hydrocarbyl radicals, substituted hydrocarbyl radicals wherein one or more hydrogen atoms is replaced by an electron-withdrawing group, or C₁-C₅₀ hydrocarbyl-substituted metalloid radicals wherein the metalloid is selected from the Group IV-A of the Periodic Table of Elements, provided that where any Q is a hydrocarbyl such Q is different from (C₅H_{5y-x}Rₓ), or both Q together are an alkylidene, olefin, acetylene or a cyclometallated hydrocarbyl;
"y" is 1 and B is a covalent bridging group containing a Group IV-A or V-A element; "w" is a number from 0 to 3; and L is a neutral Lewis base; or L represents a second transition metal compound of the same type such that the two metal centers M and M' are bridged by Q and Q', wherein M' has the same meaning as M and Q' has the same meaning as Q to provide a compound represented by the formula II; and
B. an activator compound comprising
(1) a cation which will irreversibly react with at least one ligand contained in said Group IV-B metal compound to form a Group IV-B metal cation and
(2) a labile, bulky anion which is a single coordination complex having a plurality of lipophilic radicals covalently coordinated to and shielding a central charge-bearing metal or metalloid core.

2. Catalyst system according to claim 1 wherein the heteroatom ligand group J element is nitrogen, phosphorus, oxygen or sulfur

3. Catalyst system according to claim 2 in which B is a linear, branched or cyclic alkylene group having from 1 to 6 carbon atoms, an alkyl substituted sila alkylene group having from 1 to 2 silicon atoms in place of carbon atoms in the bridge or a Si₁-Si₂ alkyl substituted silanylene group.

4. Catalyst system according to any of the preceding claims wherein R' contains from 1 to 20 carbon atoms and is a straight or branched alkyl radical, cyclic hydrocarbon radical, alkyl substituted cyclic hydrocarbon radical, aromatic radical or an alkyl substituted aromatic radical.

5. Catalyst system according to any of the preceding claims in which the anion contains substituted phenyl rings preferably an ortho alkyl substituted phenyl ring or a perfluorosubstituted anion.

6. Catalyst system according to any of the preceding claims wherein said activator compounds are represented by the formula:
[(L'-H)⁺]_{d}(M')^{m+}Q₁Q₂..Qₙ]^{d-}
wherein:
L' is a neutral Lewis base; H is a hydrogen atom; [L'-H] is a Bronsted acid; M' is a metal or metalloid selected from Groups V-B to V-A of the Periodic Table of the Elements; Q₁ to Qₙ are independently, hydride, dialkylamido, alkoxide, aryloxide, hydrocarbyl, substituted-hydrocarbyl and organometalloid radicals and any one, but no more than one of Q₁ to Qₙ may be a halide radical; "m" is an integer from 1 to 7; "n" is an integer from 2 to 8; and n-m = "d".

7. Catalyst system according to claim 6, wherein said activator compound is represented by the formula:
[L'-H]⁺[BAr₁Ar₂X₃X₄]⁻
wherein:
B is boron in a valence state of three;
Ar₁ and Ar₂ are the same or different aromatic or substituted-aromatic hydrocarbon radicals containing from 6 to 20 carbon atoms which radicals may be linked to each other through a stable bridging group; and X₃ and X₄, are independently, a hydride, halide with the proviso that X₃ and X₄ will not be halide at the same time, hydrocarbyl containing from 1 to 20 carbon atoms, substituted-hydrocarbyl, wherein one or more of the hydrogen atoms is replaced by a halogen atom, containing from 1 to 20 carbon atoms, or an organometalloid radical wherein each hydrocarbyl substitution contains from 1 to 20 carbon atoms and the metal is selected from Group IV-A of the Periodic Table of Elements.

8. Catalyst system according to any of the preceding claims prepared by reacting the components and adsorbing on a suitable support or by allowing the components to react on such a support.

9. Catalyst system according to any of the preceding claims wherein the transition metal component and the activator compound are in a molar ratio of from 1:1 to 200:1.

10. A composition of matter for use as a catalyst for the production of a polyolefin comprising the following general formula: 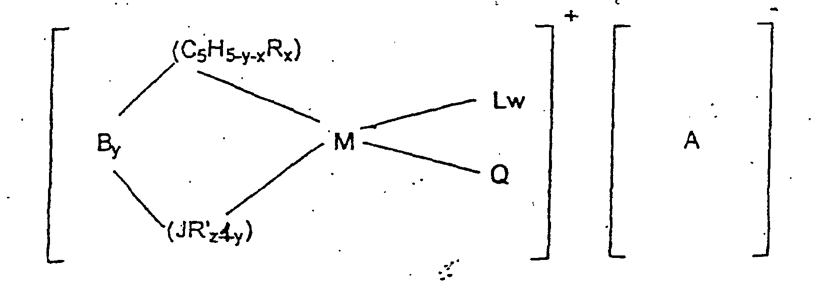 wherein:
M is a Group IV-B transition metal selected from Zr, Hf or Ti and is in its highest formal oxidation state (+4, d⁰ complex); (C₅H_{5-y-x}Rₓ) is a cyclopentadienyl ring which is substituted with from zero to four substituent groups R, "x" is 1, 2, 3, or 4 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁-C₂₀ hydrocarbyl-substituted metalloid radicals wherein the metalloid is selected from the Group IV-A of the Periodic Table of Elements, and halogen radicals, or (C₅H_{5-y-x}Rₓ) is a cyclopentadienyl ring in which two adjacent R-groups are joined forming a C₄-C₂₀ ring to give a polycyclic cyclopentadienyl ligand;
(JR'_{z-1-y}) is a heteroatom ligand in which J is an element with a co-ordination number of three from Group V-A or an element with a co-ordination number of two from Group VI-A of the Periodic Table of Elements, and each, R' is, independently a radical selected from a group consisting of C₁-C₂₀ hydrocarbyl radicals, substituted C₁-C₂₀ hydrocarbyl radicals wherein one or more hydrogen atoms is replaced by a halogen atom, and "z" is the coordination of number of the element J;
Q is independently, hydride, a C₁-C₅₀ hydrocarbyl radical, a substituted hydrocarbyl radical wherein one or more hydrogen atom is replaced by an electron-withdrawing group, or a C₁-C₅₀ hydrocarbyl-substituted metalloid radical wherein the metalloid is selected from the Group IV-A of the Periodic Table of Elements; provided that where any Q is a hydrocarbyl such Q is different from (C₅H_{5-y-x}Rₓ);
"y" is 1 and B is a covalent bridging group containing a Group IV-A or V-A element, L is a neutral Lewis base; and "w" is a number from 0 to 3, and
[A]⁻ is a labile bulky anion which is a single coordination complex having a plurality of lipophilic radicals covalently coordinated to and shielding a central charge-bearing metal or metalloid core.

11. Composition of matter according to claim 10 wherein the heteroatom ligand group element is nitrogen, phosphorus, oxygen or sulphur.

12. Composition of matter according to claim 11 in which B is a linear, branched or cyclic alkylene group having from 1 to 6 carbon atoms, an alkyl substituted sila alkylene group having from 1 to 2 silicon atoms in place of carbon atoms in the bridge or a Si₁ -Si₂ alkyl substituted silanylene group.

13. Composition of matter according to any of the preceding claims 10 to 12 wherein R' contains from 1 to 20 carbon atoms and is a straight or branched alkyl radical, cyclic hydrocarbon radical, alkyl substituted cyclic hydrocarbon radical, aromatic radical or an alkyl substituted aromatic radical.

14. Composition of matter according to any of the preceding claims 10 to 13 in which the anion contains substituted phenyl rings preferably an ortho alkyl substituted phenyl ring or a perfluorosubstituted anion.

15. Composition of matter according to any of claims 10 to 14 wherein [A]⁻ is represented by the following general formula:
[(M')^{m+} Q₁Q₂..Qₙ]^{d-}
wherein
M' is a metal or metalloid selected from Groups V-B to V-A of the Periodic Table of the Elements;
Q₁ to Qₙ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of Q₁ to Qₙ may be a halide radical, the remaining Q₁ to Qₙ being, independently, selected from the foregoing radicals;
m is an integer from 1 to 7;
n is an integer from 2 to 8; and n - m = d.

16. Composition of matter for use as a catalyst system for the production of a polyolefin of the formula

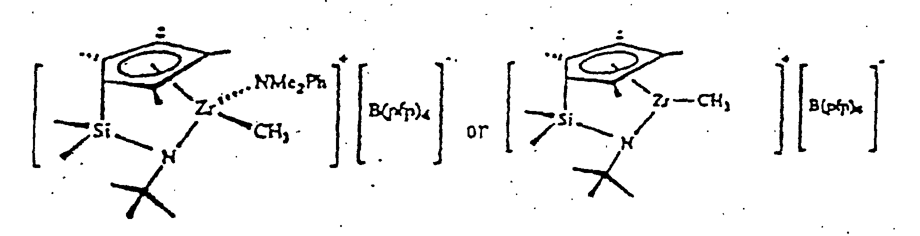

17. Composition of matter according to any of claims 10 to 16, adsorbed onto a suitable support.

18. Process for the production of homo- or co-polyolefins comprising polymerising one or more olefinically unsaturated monomer(s) in the presence of a catalyst system comprising 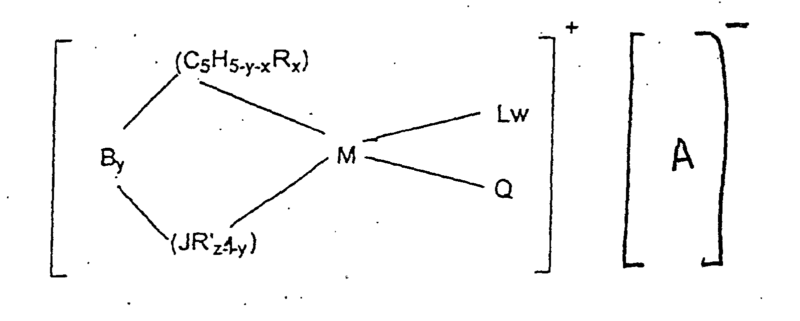 wherein:
M is a Group IVB transition metal selected from Zr, Hf or Ti and is in its highest formal oxidation state (+4, d⁰ complex); (C₅H_{5-y-x}Rₓ) is a cyclopentadienyl ring which is substituted with from zero to four substituent groups
R, "x" is 0, 1, 2, 3 or 4 denoting the degree of substitution, and each substitution group R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁-C₂₀ hydrocarbyl-substituted metalloid radicals wherein the metalloid is selected from the Group VI-A of the Periodic Table of Elements; and halogen radicals; or (C₅H_{5-y-x}Rₓ) is a cyclopentadienyl ring in which two adjacent R-groups are joined forming a C₄-C₂₀ ring to give a polycyclic cyclopentadienyl ligand;
(JR'_{z-1-y}) is a heteroatom ligand in which J is an element with a coordination number of three from Group V-A or an element with a coordination number of two from Group IV-A of the Periodic Table of Elements, and each R' is, independently a radical selected from a group consisting of C₁-C₂₀ hydrocarbyl radicals, substituted C₁-C₂₀ hydrocarbyl radicals wherein one or more hydrogen atoms is replaced by a halogen atom, and "z" is the coordination of number of the element J;
Q is independently, hydride, a C₁-C₅₀ hydrocarbyl radical, a substituted hydrocarbyl radical wherein one or more hydrogen atom is replaced by an electron with drawing group, or a C₁-C₅₀ hydrocarbyl-substituted metalloid radical wherein the metalloid is selected from the Group IV-A of the Periodic Table of Elements; provided that where any Q is a hydrocarbyl such Q is different from (C₅H_{5-y-x}Rₓ);
"y" is 1 and B is a covalent bridging group containing a Group IV A or V A element, L is a neutral Lewis base; and "w" is a number from 0 to 3, and
[A]* is a labile bulky anion which is a single coordination complex having a plurality of lipophilic radicals covalently coordinated to and shielding a central charge-bearing metal or metalloid core.

19. Process according to claim 18 comprising the steps of contacting ethylene, either alone or in combination with other olefins and/or other unsaturated monomers, with the catalyst system in a suitable polymerisation diluent.

20. A process according to claim 19 in which the catalyst system is separately prepared in concentrated form and added to the polymerisation diluent or wherein components are prepared as separate solutions and added to the polymerisation diluent to form the catalyst in situ.

21. Process according to claim 18 in which the catalyst is prepared by reacting the components and adsorbing on a support or by allowing the components to react on a support.

22. , Process according to claim 18 in which the polymerisation is in liquid phase.

23. Process according to any of claims 18 to 22 wherein the heteroatom ligand group J element is nitrogen, phosphorus, oxygen or sulphur.

24. Process according to claim 23 in which B is a linear, branched or cyclic alkylene group having from 1 to 6 carbon atoms, an alkyl substituted silaalkylene group having from 1 to 2 silicon atoms in place of carbon atoms in the bridge or a Si₁-Si₂ alkyl substituted silanylene group.

25. Process according to any of the preceding claims 18 to 24 wherein R' contains from 1 to 20 carbon atoms and is a straight or branched alkyl radical, cyclic hydrocarbon radical, alkyl substituted cyclic hydrocarbon radical, aromatic radical or an alkyl substituted aromatic radical.

26. Process according to any of the preceding claims 18 to 25 in which the anion contains substituted phenyl rings preferably an ortho alkyl substituted phenyl ring or a perfluorosubsituted anion.

## Claims (Claims for the following Contracting State(s): ES)

1. Process for the production of a homo- or co-polyolefin comprising polymerising one or more olefinically unsaturated monomer(s) in the presence of a catalyst system comprising 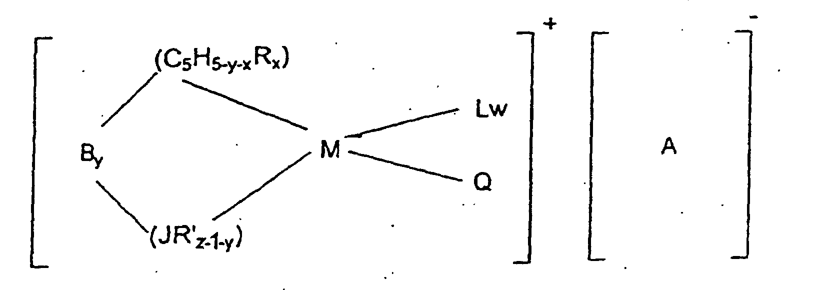 wherein:
M is a Group IVB transition metal selected from Zr, Hf or Ti and is in its highest formal oxidation state (+4, d⁰ complex); (C₅H-₅-y-xRₓ) is a cyclopentadienyl ring which is substituted with from zero to four substituent groups R, "x" is 0, 1, 2, 3 or 4 denoting the degree of substitution, and each substituent group R is, independently, a radical selected from a group consisting of C₁-C₂₀ hydrocarbyl radicals wherein one or more hydrogen atoms is replaced by a halogen atom, C₁-C₂₀ hydrcarbyl substituted metalloid radicals wherein the metalloid is selected form the Group IV-A of the Period Table of Elements, and halogen radicals, or (C₅H_{5-y-x}Rₓ) is a cyclopentadienyl ring in which two adjacent R-groups are joined forming a C₄-C₂₀ ring to give a polycyclic cyclopentadienyl ligand;
(JR'_{z-1-y}) is a heteroatom ligand in which J is an element with a coordination number of three from Group V-A or an element with a coordination number of two from Group VI-A of the Periodic Table of Elements, and each R' is, independently a radical selected form a group consisting of C₁-C₂₀ hydrocarbyl radicals, substituted C₁-C₂₀ hydrcarbyl radicals wherein one or more hydrogen atoms is replaced by a halogen atom, and 'z' is the coordination of number of the element J;
Q is independently, hydride, a C₁-C₅₀ hydrcarbyl radical, a substituted hydrocarbyl radical wherein one or more hydrogen atom is replaced by an electron-withdrawing group or a C₁-C₅₀ hydrocarbyl-substituted metalloid radical wherein the metalloid is selected from the Group IV-A of the Periodic Table of Elements; provided that where any Q is a hydrocarbyl such Q is different from (C₅H_{5-y-x}Rₓ).
'y' is 1 and B is a covalent bridging group containing a Group IV-A or V-A element, L is a neutral Lewis base; and "w" is a number from 0 to 3, and an anion [A]⁻ which is a labile bulky anion which is a single coordination complex having a plurality of lipophilic radicals covalently coordinated to and shielding a centrat charge-bearing metal or metalloid core.

2. Process according to claim 1 comprising the steps of contacting ethylene either alone or in combination with other olefins and/or other unsaturated monomers, with the catalyst system in a suitable polymerisation diluent.

3. A process according claims 2 in which the catalyst system is separately prepared in concentrated form and added to the polymerisation diluent or wherein components are prepared as separate solutions and added to the polymerisation diluent to form the catalyst in situ.

4. Process according to claim 1 in which the catalyst is prepared by reacting the components and adsorbing on a support or by allowing the components to react on a support.

5. Process according to claim 1 in which the polymerisation is in liquid phase.

6. Process according to claims 2 and 5 wherein the monomer is ethylene alone, or ethylene, in combination with an α-olefinn having 3 to 18 carbon atoms, submitted to the reaction zone at pressures of from 0.0013 bar to 3445 bar and the reaction temperature is maintained at from -100°C to 300°C.

7. Process according to any of claims 1 to 6 wherein the heteroatom ligand group V element is nitrogen, phosphorus,

8. Process according to claim 7 in which B is a linear, branched or cyclic alkylene group having from 1 to 6 carbon atoms, an alkyl substituted silaalkylene group having from 1 to 2 silicon atoms in place of carbon atoms in the bridge or a Si₁-Si₂ alkyl substituted silanylene group.

9. Process according to any of the preceding claims 1 to 8 wherein R' contains from 1 to 20 carbon atoms and is a straight or branched alkyl radical, cyclic hydrocarbon radical, alkyl substituted cyclic hydrocarbon radical, aromatic radicals or an alkyl substituted aromatic radical.

10. Process according to any of the preceding claims 1 to 9 in which the anion contains substituted phenyl rings preferably an ortho alkyl substituted phenyl ring or a perfluorosubstituted anion.

11. Process according to any of claims 1 to 10 wherein [A]⁻ is represented by the following general formula
[(M')m+Q₁ Q₂...Qₙ]^{d-}
wherein
M' is a metal or matalloid selected from the Groups subtended by Groups V-B to V-A of the Periodic Table of the Elements; i.e., Groups V-B, VI-B, VII-B, VIII, I-B, II-B, III-A, IV-A, and V-A;
Q₁ to Qₙ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of Q₁ to Qₙ may be a halide radical, the remaining Q₁ to Qₙ being, independently, selected from the foregoing radicals;
m is an integer from 1 to 7;
n is an integer from 2 to B; and n - m=d.

## Patentansprüche (Patentansprüche für folgende(n) Vertragsstaat(en): AT, CH, LI, DK, BE, DE, FR, GB, IT, NL, SE)

1. Ionisches Katalysatorsystem zur Herstellung von Polyolefinen, das erhältlich ist durch Kombinieren von
A. einer Gruppe-IV-B-Übergangsmetallkomponente mit einer - der beiden allgemeinen Formeln 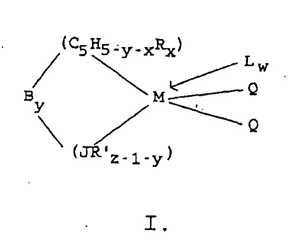 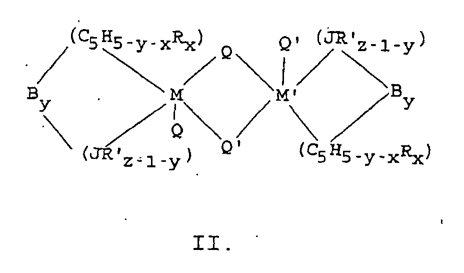 in der M Zr, Hf oder Ti ist und in seiner höchsten formalen Oxidationsstufe vorliegt (+4, d⁰-Komplex);
(C₅H_{5-y-x}Rₓ) ein Cyclopentadienylring ist, der mit null bis vier R-Gruppen substituiert ist, wobei "x" 0, 1, 2, 3 oder 4 ist und den Substitutionsgrad bezeichnet und jedes R unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein oder mehrere Wasserstoffatome durch ein Halogenatom ersetzt sind, mit C₁- bis C₂₀-Kohlenwasserstoff substituierten Metalloidresten, in denen das Metalloid ausgewählt ist aus der Gruppe IV A des Periodensystems der Elemente, und Halogenresten; oder (C₅H_{5-y-x}Rₓ) ein Cyclopentadienylring ist, bei dem zwei benachbarte R-Gruppen unter Bildung eines C₄- bis C₂₀-Rings verbunden sind, um einen polycyclischen Cyclopentadienylliganden zu ergeben;
(JR'_{z-1-y}) ein Heteroatomligand ist, in dem J ein Element mit einer Koordinationszahl von drei aus der Gruppe V-A oder ein Element mit einer Koordinationszahl von zwei aus der Gruppe VI-A des Periodensystems der Elemente ist und jedes R' unabhängig ein Rest ausgewählt aus einer Gruppe bestehend aus C₁- bis C₂₀-Kohlenwasserstoffresten und substituierten C₁- bis C₂₀-Kohlenwasserstoffresten ist, in denen ein oder mehrere Wasserstoffatome durch ein Halogenatom ersetzt sind, und "z" die Koordinationszahl des Elements J ist;
jedes Q unabhängig Hydrid, C₁- bis C₅₀-Kohlenwasserstoffreste, substituierte Kohlenwasserstoffreste, in denen ein oder mehrere Wasserstoffatome durch eine elektronenanziehende Gruppe ersetzt ist bzw. sind, oder mit C₁- bis C₅₀-Kohlenwasserstoff substituierte Metalloidreste ist, in denen das Metalloid ausgewählt ist aus der Gruppe IV-A des Periodensystems der Elemente, mit der Maßgabe, daß wenn irgendein Q Kohlenwasserstoff ist, dieses Q sich von (C₅H_{5-y-x}Rₓ) unterscheidet, oder beide Q zusammen ein Alkyliden, Olefin, Acetylen oder cyclometallierter Kohlenwasserstoff sind,
"y" 1 ist und B eine kovalente Brükengruppe ist, die ein Gruppe-IV-A- oder -V-A-Element enthält; "w" eine Zahl von 0 bis 3 ist; und L eine neutrale Lewisbase ist oder L eine zweite Übergangsmetallverbindung des gleichen Typs wiedergibt, so daß die beiden Metallzentren M und M' durch Q und Q' verbrückt werden, wobei M' die gleiche Bedeutung wie M und Q' die gleiche Bedeutung wie Q hat, um eine Verbindung wie durch die Formel II wiedergegeben wird zu schaffen, und
B. einer Aktivatorverbindung, die
(1) ein Kation, das irreversibel mit mindestens einem in der Gruppe-IV-B-Metallverbindung enthaltenen Liganden unter Bildung eines Gruppe-IV-B-Metallkations reagiert,
(2) ein labiles raumerfüllendes Anion umfaßt, das ein einziger Koordinationskomplex mit mehreren lipophilen Resten ist, die kovalent um ein ladungstragendes Metallzentrum koordiniert sind und dieses abschirmen.

2. Katalysatorsystem nach Anspruch 1, bei dem das Element J der Heteroatomligandengruppe Stickstoff, Phosphor, Sauerstoff oder Schwefel ist.

3. Katalysatorsystem nach Anspruch 2, bei dem B eine lineare, verzweigte oder cyclische Alkylengruppe mit 1 bis 6 Kohlenstoffatomen, eine alkylsubstituierte Silaalkylengruppe mit 1 bis 2 Siliciumatomen anstelle der Kohlenstoffatome in der Brücke oder eine Si₁-Si₂-alkylsubstituierte Silanylengruppe ist.

4. Katalysatorsystem nach einem der vorhergehenden Ansprüche, bei dem R' 1 bis 20 Kohlenstoffatome enthält und ein geradkettiger oder verzweigter Alkylrest, cyclischer Kohlenwasserstoffrest, alkylsubstituierter cyclischer Kohlenwasserstoffrest, aromatischer Rest oder ein alkylsubstituierter aromatischer Rest ist.

5. Katalysatorsystem nach einem der vorhergehenden Ansprüche, bei dem das Anion substituierte Phenylringe enthält, vorzugsweise einen ortho-alkylsubstituierten Phenylring, oder ein perfluorsubstituiertes Anion ist.

6. Katalysatorsystem nach einem der vorhergehenden Ansprüche, bei dem die Aktivatorverbindungen durch die Formel
[(L'-H)⁺ _{d}[ (M')^{m+}Q₁Q₂..Qₙ]^{d-}
wiedergegeben werden, in der
L' eine neutrale Lewisbase ist; H ein Wasserstoffatom ist; [L'-H] eine Brönstedtsäure ist; M' ein Metall oder Metalloid ausgewählt aus den Gruppen V-B bis V-A des Periodensystems der Elemente ist; Q₁ bis Qₙ unabhängig Hydrid-, Dialkylamido-, Alkoxid-, Aryloxid-, Kohlenwasserstoff-, substituierte Kohlenwasserstoff- und Organometalloidreste sind und ein beliebiger, aber nicht mehr als einer aus Q₁ bis Qₙ ein Halogenidrest sein kann; "m" eine ganze Zahl von 1 bis 7 ist;
"n" eine ganze Zahl von 2 bis 8 ist und n - m = "d" ist.

7. Katalysatorsystem nach Anspruch 6, bei dem die Aktivatorverbindung durch die Formel
[L'-H]⁺[BAr₁Ar₂X₃X₄]⁻
wiedergegeben wird, in der
B Bor in der Wertigkeitsstufe drei ist;
Ar₁ und Ar₂ die gleichen oder unterschiedliche aromatische oder substituierte aromatische Kohlenwasserstoffreste sind, die 6 bis 20 Kohlenstoffatome enthalten, wobei die Reste über eine stabile Brückengruppe miteinander verbunden sein können, und X₃ und X₄ unabhängig ein Hydridrest, Halogenidrest mit der Maßgabe, daß X₃ und X₄ nicht beide gleichzeitig Halogenid sind, Kohlenwasserstoffrest mit 1 bis 20 Kohlenstoffatomen, substituierter Kohlenwasserstoffrest mit 1 bis 20 Kohlenstoffatomen, bei dem ein oder mehrere der Wasserstoffatome durch ein Halogenatom ersetzt ist bzw. sind, oder ein Organometalloidrest sind, bei dem jeder Kohlenwasserstoffsubstituent 1 bis 20 Kohlenstoffatome enthält und das Metall ausgewählt ist aus der Gruppe IV A des Periodensystems der Elemente.

8. Katalysatorsystem nach einem der vorhergehenden Ansprüche, das durch Umsetzung der Komponenten und Absorbieren auf einem geeigneten Träger hergestellt wird oder indem die Komponenten auf einem solchen Träger reagieren gelassen werden.

9. Katalysatorsystem nach einem der vorhergehenden Ansprüche, bei dem die Übergangsmetallkomponente und die Aktivatorverbindung in einem Molverhältnis von 1:1 bis 200:1 vorliegen.

10. Stoff zur Verwendung als Katalysator zur Herstellung eines Polyolefins, welcher die folgende allgemeine Formel 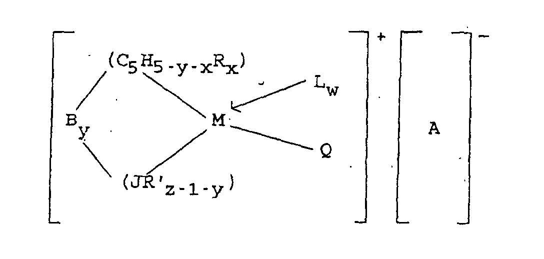 umfaßt, in der M ein Gruppe-IV-B-Übergangsmetall ausgewählt aus Zr, Hf oder Ti ist und in seiner höchsten formalen Oxidationsstufe (+4, d⁰-Komplex) vorliegt;
(C₅H_{5-y-x}Rₓ) ein Cyclopentadienylring ist, der mit null bis vier Substituentengruppen R substituiert ist, wobei "x" 0, 1, 2, 3 oder 4 ist und den Substitutionsgrad bezeichnet und jede Substituentengruppe R unabhängig ein Rest ausgewählt aus einer Gruppe bestehend aus C₁- bis C₂₀-Kohlenwasserstoffresten, substituierten C₁- bis -C₂₀-Kohlenwasserstoffresten, in denen ein oder mehrere Wasserstoffatome durch ein Halogenatom ersetzt sind, mit C₁- bis C₂₀-Kohlenwasserstoff substituierten Metalloidresten, in denen das Metalloid ausgewählt ist aus der Gruppe IV A des Periodensystems der Elemente, und Halogenresten ist; oder (C₅H_{5-y-x}Rₓ) ein Cyclopentadienylring ist, bei dem zwei benachbarte R-Gruppen unter Bildung eines C₄- bis C₂₀-Rings verbunden sind, um einen polycyclischen Cyclopentadienylliganden zu ergeben;
(JR'_{z-1-y}) ein Heteroatomligand ist, in dem J ein Element mit einer Koordinationszahl von drei aus der Gruppe V-A oder ein Element mit einer Koordinationszahl von zwei aus der Gruppe VI-A des Periodensystems der Elemente ist und jedes R' unabhängig ein Rest ausgewählt aus einer Gruppe bestehend aus C₁- bis C₂₀-Kohlenwasserstoffresten und substituierten C₁- bis C₂₀-Kohlenwasserstoffresten, in denen ein oder mehrere Wasserstoffatome durch ein Halogenatom ersetzt ist bzw. sind, ist und "z" die Koordinationszahl des Elements J ist;
Q unabhängig Hydrid, ein C₁- bis C₅₀-Kohlenwasserstoffrest, substituierter Kohlenwasserstoffrest, in dem ein oder mehrere Wasserstoffatome durch eine elektronenanziehende Gruppe ersetzt sind, oder mit C₁- bis C₅₀-Kohlenwasserstoff substituierter Metalloidrest ist, wobei das Metalloid ausgewählt ist aus der Gruppe IV-A des Periodensystems der Elemente, mit der Maßgabe, daß wenn irgendein Q Kohlenwasserstoff ist, dieses Q sich von (C₅H_{5-y-x}Rₓ) unterscheidet,
"y" 1 ist und B eine kovalente Brükengruppe ist, die ein Gruppe-IV-A- oder -V-A-Element enthält; L eine neutrale Lewisbase ist und "w" eine Zahl von 0 bis 3 ist; und
[A]⁻ ein labiles raumerfüllendes Anion ist, das ein einziger Koordinationskomplex mit mehreren lipophilen Resten ist, die kovalent an ein ladungstragendes Metall- oder Metalloidzentrum koordiniert sind und dieses abschirmen.

11. Stoff nach Anspruch 10, bei dem das Element der Heteroatomligandengruppe Stickstoff, Phosphor, Sauerstoff oder Schwefel ist.

12. Stoff nach Anspruch 11, bei dem B eine lineare, verzweigte oder cyclische Alkylengrupppe mit 1 bis 6 Kohlenstoffatomen, eine alkylsubstituierte Silaalkylengruppe mit 1 bis 2 Siliciumatomen anstelle der Kohlenstoffatome in der Brücke oder eine Si₁-Si₂-alkylsubstituierte Silanylengruppe ist.

13. Stoff nach einem der vorhergehenden Ansprüche 10 bis 12, in dem R' 1 bis 20 Kohlenstoffatome enthält und ein geradkettiger oder verzweigter Alkylrest, cyclischer Kohlenwasserstoffrest, alkylsubstituierter cyclischer Kohlenwasserstoffrest, aromatischer Rest oder alkylsubstituierter aromatischer Rest ist.

14. Stoff nach einem der vorhergehenden Ansprüche 10 bis 13, in dem das Anion substituierte Phenylringe enthält, vorzugsweise einen ortho-alkylsubstituierten Phenylring, oder ein perfluorsubstituiertes Anion ist.

15. Stoff nach einem der Ansprüche 10 bis 14, in dem [A]⁻ durch die folgende allgemeine Formel
[(M')^{m+}Q₁Q₂...Qₙ]^{d-}
wiedergegeben wird, in der M' ein Metall oder Metalloid ausgewählt aus den Gruppen V-B bis V-A des Periodensystems ist;
Q₁ bis Qₙ unabhängig ausgewählt sind aus der Gruppe bestehend aus Hydridresten, Dialkylamidoresten, Alkoxid- und Aryloxidresten, Kohlenwasserstoff- und substituierten Kohlenwasserstoffresten und Organometalloidresten und ein beliebiges, aber nicht mehr als eines von Q₁ bis Qₙ ein Halogenidrest sein kann, wobei die verbleibenden Q₁ bis Qₙ unabhängig ausgewählt sind aus den vorhergehenden Resten;
m eine ganze Zahl von 1 bis 7 ist;
n eine ganze Zahl von 2 bis 8 ist und n - m = d ist.

16. Stoff mit der Formol 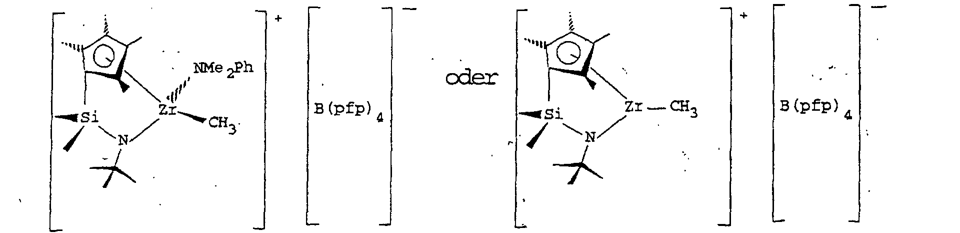 zur Verwendung als Katalysatorsystem zur Herstellung eines Polyolefins.

17. Stoff nach einem der Ansprüche 10 bis 16, der auf einem geeigneten Träger adsorbiert ist.

18. Verfahren zur Herstellung von Homo- oder Copolyolefinen, bei dem ein olefinisch ungesättigtes Monomer oder mehrere olefinisch ungesättigte Monomere in Gegenwart eines Katalysatorsystems polymerisiert wird, das 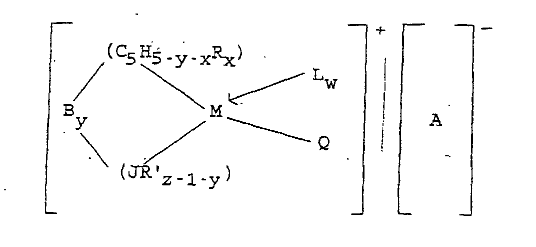 umfaßt, wobei M ein Gruppe IV B Übergangsmetall ausgewählt aus Zr, Hf oder Ti ist und in seiner höchsten formalen Oxidationsstufe (+4, d⁰-Komplex) vorliegt;
(C₅H_{5-y-x}Rₓ) ein Cyclopentadienylring ist, der mit null bis vier Substituentengruppen R substituiert ist, wobei "x" 0, 1, 2, 3 oder 4 ist und den Substitutionsgrad bezeichnet und jede Substituentengruppe R unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein oder mehrere Wasserstoffatome durch ein Halogenatom ersetzt sind, mit C₁- bis C₂₀-Kohlenwasserstoff substituierten Metalloidresten, in denen das Metalloid ausgewählt ist aus der Gruppe IV A des Periodensystems der Elemente, und Halogenresten ist; oder (C₅H_{5-y-x}Rₓ) ein Cyclopentadienylring ist, bei dem zwei benachbarte R-Gruppen unter Bildung eines C₄- bis C₂₀-Rings verbunden sind, um einen polycyclischen Cyclopentadienylliganden zu ergeben;
(JR'_{z-1-y}) ein Heteroatomligand ist, in dem J ein Element mit einer Koordinationszahl von drei aus der Gruppe V-A oder ein Element mit einer Koordinationszahl von zwei aus der Gruppe VI-A des Periodensystems der Elemente ist und jedes R' unabhängig ein Rest ausgewählt aus einer Gruppe bestehend aus C₁- bis C₂₀-Kohlenwasserstoffresten und substituierten C₁- bis C₂₀-Kohlenwasserstoffresten, in denen ein oder mehrere Wasserstoffatome durch ein Halogenatom ersetzt ist bzw. sind, ist und "z" die Koordinationszahl des Elements J ist;
Q unabhängig Hydrid, ein C₁- bis C₅₀-Kohlenwasserstoffrest, substituierter Kohlenwasserstoffrest, in dem ein oder mehrere Wasserstoffatome durch eine elektronenanziehende Gruppe ersetzt sind, oder mit C₁- bis C₅₀-Kohlenwasserstoff substituierter Metalloidrest ist, wobei das Metalloid ausgewählt ist aus der Gruppe IV-A des Periodensystems der Elemente, mit der Maßgabe, daß wenn irgendein Q Kohlenwasserstoff ist, dieses Q sich von (C₅H_{5-y-x}Rₓ) unterscheidet,
"y" 1 ist und B eine kovalente Brükengruppe ist, die ein Gruppe-IV-A- oder -V-A-Element enthält; L eine neutrale Lewisbase ist und "w" eine Zahl von 0 bis 3 ist; und
[A]⁻ ein labiles raumerfüllendes Anion ist, das ein einziger Koordinationskomplex mit mehreren lipophilen Resten ist, die kovalent an ein ladungstragendes Metall- oder Metalloidzentrum koordiniert sind und dieses abschirmen.

19. Verfahren nach Anspruch 18, bei dem in Stufen Ethylen entweder allein oder in Kombination mit anderen Olefinen und/oder anderen ungesättigten Monomeren mit dem Katalysatorsystem in einem geeigneten Polymerisationsverdünnungsmittel kontaktiert wird.

20. Verfahren nach Anspruch 19, bei dem das Katalysatorsystem getrennt in konzentrierter Form hergestellt wird und dem Polymerisationsverdünnungsmittel zugesetzt wird oder bei dem Komponenten als getrennte Lösungen hergestellt werden und dem Polymerisationsverdünnungsmittel zugesetzt werden, um den Katalysator in situ zu bilden.

21. Verfahren nach Anspruch 18, bei dem das Katalysatorsystem hergestellt wird, indem die Komponenten umgesetzt und auf einem Träger adsorbiert werden oder die Komponenten auf einem Träger reagieren gelassen werden.

22. Verfahren nach Anspruch 18, bei dem die Polymerisation in der flüssigen Phase erfolgt.

23. Verfahren nach einem der Ansprüche 18 bis 22, bei dem das Element J der Heteroatomligandengruppe Stickstoff, Phos, phor, Sauerstoff oder Schwefel ist.

24. Verfahren nach Anspruch 23, bei dem B eine lineare, verzweigte oder cyclische Alkylengruppe mit 1 bis 6 Kohlenstoffatomen, eine alkylsubstituierte Silaalkylengruppe mit 1 bis 2 Siliciumatomen anstelle der Kohlenstoffatome in der Brücke oder eine Si₁-Si₂alkylsubstituierte Silanylengruppe ist.

25. Verfahren nach einem der vorhergehenden Ansprüche 18 bis 24, bei dem R' 1 bis 20 Kohlenstoffatome enthält und ein geradkettiger oder verzweigter Alkylrest, cyclischer Kohlenwasserstoffrest, alkylsubstituierter cyclischer Kohlenwasserstoffrest, aromatischer Rest oder ein alkylsubstituierter aromatischer Rest ist.

26. Verfahren nach einem der vorhergehenden Ansprüche 18 bis 25 bei dem das Anion substituierte Phenylringe, vorzugsweise einen ortho-alkylsubstituierten Phenylring, enthält oder ein perfluorsubstituiertes Anion ist.

## Patentansprüche (Patentansprüche für folgende(n) Vertragsstaat(en): ES)

1. Verfahren zur Herstellung von Homo- oder Copolyolefinen, bei dem ein olefinisch ungesättigtes Monomer oder mehrere olefinisch ungesättigte Monomere in Gegenwart eines Katalysatorsystems polymerisiert wird, das 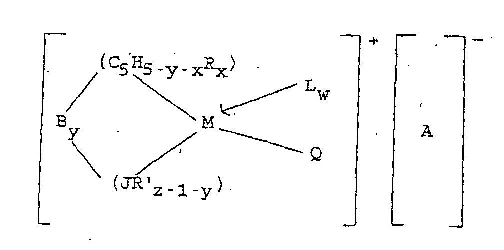 umfaßt, wobei M ein Gruppe IV B Übergangsmetall ausgewählt aus Zr, Hf oder Ti ist und in seiner höchsten formalen Oxidationsstufe (+4, d⁰-Komplex) vorliegt;
(C₅H_{5-y-x}Rₓ) ein Cyclopentadienylring ist, der mit null bis vier Substituentengruppen R substituiert ist, wobei "x" 0, 1, 2, 3 oder 4 ist und den Substitutionsgrad bezeichnet und jede Substituentengruppe R unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein oder mehrere Wasserstoffatome durch ein Halogenatom ersetzt sind, mit C₁- bis C₂₀-Kohlenwasserstoff substituierten Metalloidresten, in denen das Metalloid ausgewählt ist aus der Gruppe IV A des Periodensystems der Elemente, und Halogenresten ist; oder (C₅H_{5-y-x}Rₓ) ein Cyclopentadienylring ist, bei dem zwei benachbarte R-Gruppen unter Bildung eines C₄- bis C₂₀-Rings verbunden sind, um einen polycyclischen Cyclopentadienylliganden zu ergeben;
(JR' _{z-1-y}) ein Heteroatomligand ist, in dem J ein Element mit einer Koordinationszahl von drei aus der Gruppe V-A oder ein Element mit einer Koordinationszahl von zwei aus der Gruppe VI-A des Periodensystems der Elemente ist und jedes R' unabhängig ein Rest ausgewählt aus einer Gruppe bestehend aus C₁- bis C₂₀-Kohlenwasserstoffresten und substituierten C₁- bis C₂₀-Kohlenwasserstoffresten, in denen ein oder mehrere Wasserstoffatome durch ein Halogenatom ersetzt ist bzw. sind, ist und "z" die Koordinationszahl des Elements J ist;
Q unabhängig Hydrid, ein C₁- bis C₅₀-Kohlenwasserstoffrest, substituierter Kohlenwasserstoffrest, in dem ein oder mehrere Wasserstoffatome durch eine elektronenanziehende Gruppe ersetzt sind, oder mit C₁- bis C₅₀-Kohlenwasserstoff substituierter Metalloidrest ist, wobei das Metalloid ausgewählt ist aus der. Gruppe IV-A des Periodensystems der Elemente, mit der Maßgabe, daß wenn irgendein Q Kohlenwasserstoff ist, dieses Q sich von (C₅H_{5-y-x}Rₓ) unterscheidet,
"y" 1 ist und B eine kovalente Brükengruppe ist, die ein Gruppe-IV-A- oder -V-A-Element enthält; L eine neutrale Lewisbase ist und "w" eine Zahl von 0 bis 3 ist; und
[A]⁻ ein labiles raumerfüllendes Anion ist, das ein einziger Koordinationskomplex mit mehreren lipophilen Resten ist, die kovalent an ein ladungstragendes Metall- oder Metalloidzentrum koordiniert sind und dieses abschirmen.

2. Verfahren nach Anspruch 1, bei dem in Stufen Ethylen entweder allein oder in Kombination mit anderen Olefinen und/oder anderen ungesättigten Monomeren mit dem Katalysatorsystem in einem geeigneten Polymerisationsverdünnungsmittel kontaktiert wird.

3. Verfahren nach Anspruch 2, bei dem das Katalysatorsystem getrennt in konzentrierter Form hergestellt wird und dem Polymerisationsverdünnungsmittel zugesetzt wird oder bei dem Komponenten als getrennte Lösungen hergestellt werden und dem Polymerisationsverdünnungsmittel zugesetzt werden, um den Katalysator in situ zu bilden.

4. Verfahren nach Anspruch 1, bei dem das Katalysatorsystem hergestellt wird, indem die Komponenten umgesetzt und auf einem Träger adsorbiert werden oder die Komponenten auf einem Träger reagieren gelassen werden.

5. Verfahren nach Anspruch 1, bei dem die Polymerisation in der flüssigen Phase erfolgt.

6. Verfahren nach den Ansprüchen 2 und 5, bei dem das Monomer nur Ethylen ist, oder Ethylen in Kombination mit einem α-Olefin mit 3 bis 18 Kohlestoffatomen, dass der Reaktionszone bei Drücken von 0,0013 Bar bis 3445 Bar zugeführt wird, und die Reaktionstemperatur bei - 100°C bis 300°C gehalten wird.

7. Verfahren nach einem der Ansprüche 1 bis 6, bei dem das Element J der Heteroatomligandengruppe Stickstoff, Phosphor, Sauerstoff oder Schwefel ist.

8. Verfahren nach Anspruch 7, bei dem B eine lineare, verzweigte oder cyclische Alkylengruppe mit 1 bis 6 Kohlenstoffatomen, eine alkylsubstituierte Silaalkylengruppe mit 1 bis 2 Siliciumatomen anstelle der Kohlenstoffatome in der Brücke oder eine Si₁-Si₂-alkylsubstituierte Silanylengruppe ist.

9. Verfahren nach einem der vorhergehenden Ansprüche 1 bis 8, bei dem R' 1 bis 20 Kohlenstoffatome enthält und ein geradkettiger oder verzweigter Alkylrest, cyclischer Kohlenwasserstoffrest, alkylsubstituierter cyclischer Kohlenwasserstoffrest, aromatischer Rest oder ein alkylsubstituierter aromatischer Rest ist.

10. Verfahren nach einem der vorhergehenden Ansprüche 1 bis 9.

11. Verfahren nach einem der Ansprüche 1 bis 10, bei dem [A]⁻ durch die folgende allgemeine Formel:
[(M')^{m+}Q₁Q₂..Qₙ]^{d-}
wiedergegeben wird, in der M' ein Metall oder Metalloid ausgewählt aus den Gruppen gegenüberliegend den Gruppen V-B bis V-A des Periodensystems ist, d.h. Gruppen V-B, VI-B, VII-B, VIII, I-B, II-B, III-A, IV-A und V-A;
Q₁ bis Qₙ unabhängig ausgewählt sind aus der Gruppe bestehend aus Hydridresten, Dialkylamidoresten, Alkoxid- und Aryloxidresten, Kohlenwasserstoff- und substituierten Kohlenwasserstoffresten und Organometalloidresten und ein beliebiges, aber nicht mehr als eines von Q₁ bis Qₙ ein Halogenidrest sein kann, wobei die verbleibenden Q₁ bis Qₙ unabhängig ausgewählt sind aus den vorhergehenden Resten;
m eine ganze Zahl von 1 bis 7 ist;
n eine ganze Zahl von 2 bis 8 ist und n - m = d ist.

## Revendications (Revendications pour l'(les) Etat(s) contractant(s) suivant(s): AT, CH, LI, DK, BE, DE, FR, GB', IT, NL, SE)

1. Formulation de catalyseur ionique pour la production de polyoléfines, pouvant être obtenue en associant :
A. un composé de métal de transition du Groupe IV-B répondant à une des deux formules générales 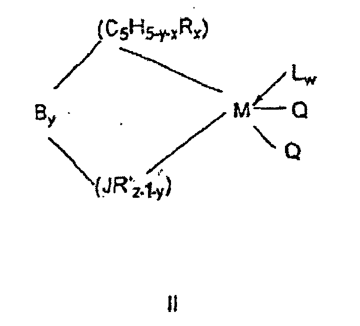 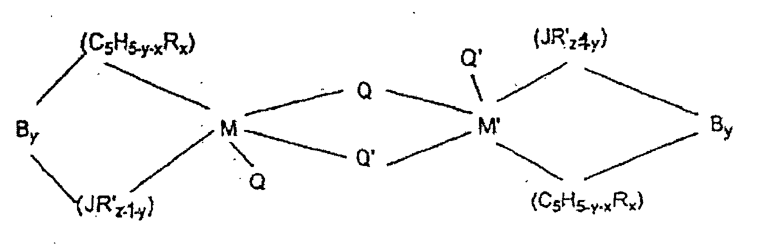 dans laquelle M représente Zr, Hf ou Ti et est à son état d'oxydation réel le plus élevé (+4, d° complexe) ;
(C₅H_{5-y-x}Rₓ) représente un noyau cyclopentadiényle qui est substitué avec 0 à 4 radicaux consistant en groupes R, "x" est égal à 0, 1, 2, 3 ou 4 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, radicaux métalloïdiques à substituants hydrocarbyle en C₁ à C₂₀ dans lesquels le métalloïde est choisi dans le Groupe IV-A du Tableau Périodique des Eléments, et radicaux halogène ; ou bien (C₅H_{5-y-x}Rₓ) représente un noyau cyclopentadiényle dans lequel deux groupes R adjacents sont joints et forment un noyau en C₄ à C₂₀, donnant un ligand cyclopentadiényle polycyclique ;
(JR'_{z-1-y}) représente un ligand hétéro-atomique dans lequel J est un élément ayant un indice de coordination égal à 3 du Groupe V-A ou un élément ayant un indice de coordination égal à 2 du Groupe VI-A du Tableau Périodique des Eléments, et chaque groupe R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, et "z" représente l'indice de coordination de l'élément J ;
chaque radical Q représente, indépendamment, un radical hydrure, un radical hydrocarbyle en C₁ à C₅₀, un radical hydrocarbyle substitué dans lequel un ou plusieurs atomes d'hydrogène sont remplacés par un groupe électrophile, ou bien un radical métalloïdique à substituant hydrocarbyle en C₁ à C₅₀ dans lequel le métalloïde est choisi dans le Groupe IV-A du Tableau Périodique des Eléments, sous réserve que, lorsque n'importe quel radical Q représente un radical hydro-carbyle, un tel radical Q soit différent de (C₅H_{5-y-x}Rₓ), ou bien deux groupes Q, conjointement, représentent un radical alkylidène, oléfine, acétylène ou un radical hydrocarbyle cyclométallé ;
"y" est égal à 1 et B représente un groupe covalent de pontage contenant un élément du Groupe IV-A ou V-A ; "w" représente un nombre de 0 à 3 ; et L représente une base neutre de Lewis ; ou bien L représente un second composé de métal de transition du même type, de telle sorte que les deux centres métalliques M et M' soient pontés par Q et Q', M' ayant la même définition que M et Q' ayant la même définition que Q, pour former un composé représenté par la formule II ; et
B. un composé activateur comprenant
(1) un cation qui réagira de manière irréversible avec au moins un ligand présent dans ledit composé de métal du Groupe IV-B pour former un cation de métal du Groupe IV-B ; et
(2) un anion volumineux labile qui consiste en un complexe de coordination simple ayant une pluralité de radicaux lipophiles en coordination covalente avec, et faisant écran à, un noyau métallique ou métalloïdique central porteur de charge.

2. Formulation de catalyseur suivant la revendication 1, dans laquelle l'élément J du groupe hétéro-atomique servant de ligand consiste en azote, phosphore, oxygène ou soufre.

3. Formulation de catalyseur suivant la revendication 2, dans laquelle "B" représente un groupe alkylène linéaire, ramifié ou cyclique ayant 1 à 6 atomes de carbone, un groupe sila-alkylène à substituant alkyle ayant 1 ou 2 atomes de silicium à la place d'atomes de carbone dans le pont, ou un groupe silanylène à substituant Si₁-Si₂-alkyle.

4. Formulation de catalyseur suivant l'une quelconque des revendications précédentes, dans laquelle R' contient 1 à 20 atomes de carbone et est un radical alkyle droit ou ramifié, un radical hydrocarboné cyclique, un radical hydrocarboné cyclique à substituant alkyle, un radical aromatique ou un radical aromatique à substituant alkyle.

5. Formulation de catalyseur suivant l'une quelconque des revendications précédentes, dans laquelle l'anion contient des noyaux phényle substitués, de préférence un noyau phényle à substituant ortho-alkyle ou un anion perfluoro-substitué.

6. Formulation de catalyseur suivant l'une quelconque des revendications précédentes, dans laquelle les composés activateurs sont représentés par la formule :
[(L'-H)⁺]_{d}(M')^{m+}Q₁Q₂..Qₙ]^{d-}
dans laquelle :
L' représente une base neutre de Lewis ; H représente un atome d'hydrogène ; [L'-H] représente un acide de Bronsted ; M' représente un métal ou métalloïde choisi dans les groupes V-B à V-A du Tableau Périodique des Eléments ; Q₁ à Qₙ représentent, indépendamment, un radical hydrure, dialkylamido, alcoolate, aryloxyde, hydrocarbyle, hydrocarbyle substitué ou organométalloïdique, et l'un quelconque, mais pas plus d'un, des radicaux Q₁ à Qₙ peut représenter un radical halogénure ; "m" est un nombre entier de 1 à 7 ; "n" est un nombre entier de 2 à 8 ; et la différence n - m est égale à "d".

7. Formulation de catalyseur suivant la revendication 6, dans laquelle le composé activateur est représenté par la formule :
[(L'-H]⁺[BAr₁Ar₂X₃X₄]⁻
dans laquelle :
B représente le bore à un état de valence égal à 3 ;
Ar₁ et Ar₂ représentent des radicaux hydrocarbonés aromatiques ou aromatiques substitués identiques ou différents, contenant 6 à 20 atomes de carbone, radicaux qui peuvent être liés l'un à l'autre par un groupe de pontage stable ; et X₃ et X₄ représentent, indépendamment, un radical hydrure, un radical halogénure sous réserve que X₃ et X₄ ne puissent représenter en même temps des radicaux halogénure, un radical hydrocarbyle contenant 1 à 20 atomes de carbone, un radical hydrocarbyle substitué contenant 1 à 20 atomes de carbone, dans lequel un ou plusieurs des atomes d'hydrogène sont remplacés par des atomes d'halogènes, ou un radical organométalloïdique dans lequel chaque substituant hydrocarbyle contient 1 à 20 atomes de carbone et le métal est choisi dans le Groupe IV-A du Tableau Périodique des Eléments.

8. Formulation de catalyseur suivant l'une quelconque des revendications précédentes, préparée par réaction des constituants et adsorption sur un support convenable, ou bien en laissant les constituants réagir sur un tel support.

9. Formulation de catalyseur suivant l'une quelconque des revendications précédentes, dans laquelle le composé de métal de transition et le composé activateur sont présents en un rapport molaire de 1:1 à 200:1.

10. Composition destinée à être utilisée comme catalyseur pour la production d'une polyoléfine, comprenant la formule générale suivante : 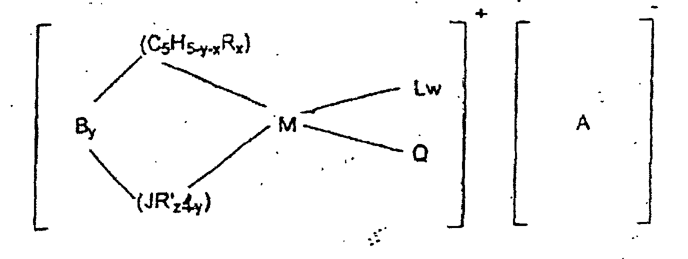 dans laquelle M représente un métal de transition du Groupe IV-B choisi entre Zr, Hf et Ti et est à son état d'oxydation réel le plus élevé (+4, d° complexe) ; (C₅H_{5-y-x}Rₓ) représente un noyau cyclopentadiényle qui est substitué avec 0 à 4 groupes R, "x" est égal à 1, 2, 3 ou 4 et désigne le degré de substitution, et chaque groupe R servant de substituant représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, radicaux métalloïdiques à substituants hydrocarbyle en C₁ à C₂₀ dans lesquels le métalloïde est choisi dans le Groupe IV-A du Tableau Périodique des Eléments, et radicaux halogène ; ou bien (C₅H5_{-y-x}Rₓ) représente un noyau cyclopentadiényle dans lequel deux groupes R adjacents sont joints en formant un noyau en C₄ à C₂₀, ce qui donne un ligand cyclopentadiényle polycyclique ;
EJR'_{z-1-y}) représente un ligand hétéro-atomique dans lequel J représente un élément ayant un indice de coordination égal à 3 du Groupe V-A ou un élément ayant un indice de coordination égal à 2 du Groupe VI-A du Tableau Périodique des Eléments, et chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, et "z" représente l'indice de coordination de l'élément J ;
Q représente, indépendamment, un radical hydrure, un radical hydrocarbyle en C₁ à C₅₀, un radical hydrocarbyle substitué dans lequel un ou plusieurs atomes d'hydrogène sont remplacés par un groupe électrophile, ou bien un radical métalloïdique à substituant hydrocarbyle en C₁ à C₅₀ dans lequel le métalloïde est choisi dans le Groupe IV-A du Tableau Périodique des Eléments, sous réserve que, lorsque n'importe quel radical Q représente un radical hydrocarbyle, ce radical Q soit différent de (C₅H_{5-y-x}Rₓ) ;
"y" est égal à 1 et B représente un groupe covalent de pontage contenant un élément du Groupe IV-A ou V-A ; L représente une base neutre de Lewis ; et "w" est un nombre de 0 à 3 ; et
[A]⁻ représente un anion volumineux labile qui est un complexe de coordination simple comportant une pluralité de radicaux lipophiles en coordination covalente avec, et faisant écran à, un noyau métallique ou métalloïdique central porteur de charge.

11. Composition suivant la revendication 10, dans laquelle l'élément du groupe hétéro-atomique servant de ligand est l'azote, le phosphore, l'oxygène ou le soufre.

12. Composition suivant la revendication 11, dans laquelle B représente un groupe alkylène linéaire, ramifié ou cyclique ayant 1 à 6 atomes de carbone, un groupe sila-alkylène à substituant alkyle ayant 1 ou 2 atomes de silicium à la place d'atomes de carbone dans le pont, ou un groupe silanylène à substituant Si₁-Si₂-alkyle.

13. Composition suivant l'une quelconque des revendications 10 à 12 précédentes, dans laquelle R' contient 1 à 20 atomes de carbone et est un radical alkyle droit ou ramifié, un radical hydrocarboné cyclique, un radical hydrocarboné cyclique à substituant alkyle, un radical aromatique ou un radical aromatique à substituant alkyle.

14. Composition suivant l'une quelconque des revendications 10 à 13 précédentes, dans laquelle l'anion contient des noyaux phényle substitués, de préférence un noyau phényle à substituant ortho-alkyle ou un anion perfluoro-substitué.

15. Composition suivant l'une quelconque des revendications 10 à 14 précédentes, dans laquelle [A]⁻ est représenté par la formule générale suivante :
[(M')^{m+}Q₁Q₂ .. Qₙ]^{d-}
dans laquelle M' représente un métal ou métalloïde choisi dans les groupes V-B à V-A du Tableau Périodique des Eléments ;
Q₁ à Qₙ sont choisis, indépendamment, dans le groupe consistant en radicaux hydrure, radicaux dialkylamido, radicaux alcoolate et radicaux aryloxyde, radicaux hydrocarbyle et radicaux hydrocarbyle substitués et radicaux organométalloïdiques, et l'un quelconque, mais pas plus d'un, des radicaux Q₁ à Qₙ peut représenter un radical halogénure, les radicaux Q₁ à Qₙ restants étant choisis, indépendamment, parmi les radicaux précités ;
"m" est un nombre entier de 1 à 7 ;
"n" est un nombre entier de 2 à 8 ; et la différence n - m est égale à "d".

16. Composition destinée à être utilisée comme formulation de catalyseur pour la production de polyoléfine, de formule

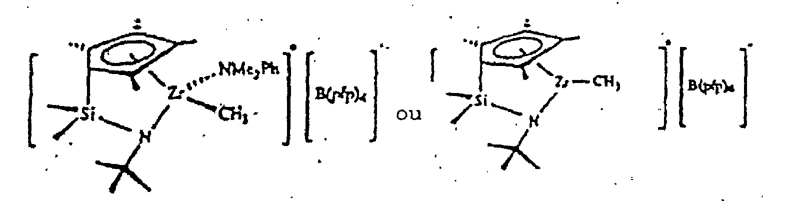

17. Composition suivant l'une quelconque des revendications 10 à 16, adsorbée sur un support convenable.

18. Procédé pour la production d'homo- ou de copolyoléfines, comprenant la polymérisation d'un ou plusieurs monomères à insaturation oléfinique en présence d'une formulation de catalyseur comprenant la formule 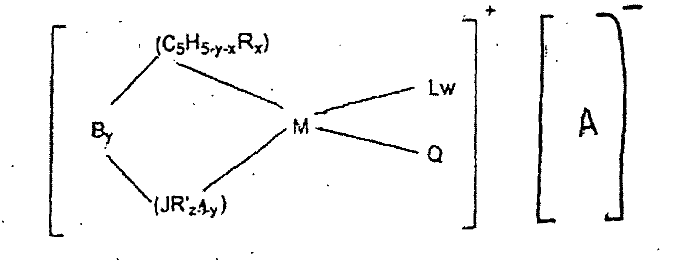 dans laquelle : M représente un métal de transition du Groupe IV-B choisi entre Zr, Hf et Ti et est à son état d'oxydation réel le plus élevé (+4, d° complexe) ; (C₅H_{5-y-x}Rₓ) représente un noyau cyclopentadiényle qui est substitué avec 0 à 4 groupes R, "x" est égal à 0, 1, 2, 3 ou 4 et désigne le degré de substitution, et chaque groupe R servant de substituant représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, radicaux métalloïdiques à substituants hydrocarbyle en C₁ à C₂₀ dans lesquels le métalloïde est choisi dans le Groupe IV-A du Tableau Périodique des Eléments, et radicaux halogéno ; ou bien (C₅H_{5-y-x}Rₓ) représente un noyau cyclopentadiényle dans lequel deux groupes R adjacents sont joints en formant un noyau en C₄ à C₂₀, ce qui donne un ligand cyclopentadiényle polycyclique ;
(JR' _{z-1-y}) représente un ligand hétéro-atomique dans lequel J est un élément ayant un indice de coordination égal à 3 du Groupe V-A ou un élément ayant un indice de coordination égal à 2 du Groupe VI-A du Tableau Périodique des Eléments, et chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, et "z" représente l'indice de coordination de l'élément J ;
Q représente, indépendamment, un radical hydrure, un radical hydrocarbyle en C₁ à C₅₀, un radical hydrocarbyle substitué dans lequel un ou plusieurs atomes d'hydrogène sont remplacés par un groupe électrophile, ou bien un radical métalloïdique à substituant hydrocarbyle en C₁ à C₅₀ dans lequel le métalloïde est choisi dans le Groupe IV-A du Tableau Périodique des Eléments, sous réserve que, lorsque n'importe quel radical Q représente un radical hydrocarbyle, ce radical Q soit différent de (C₅H_{5-y-x}Rₓ) ;
"y" est égal à 1 et B représente un groupe covalent de pontage contenant un élément du Groupe IV-A ou V-A ; L représente une base neutre de Lewis ; et "w" représente un nombre de 0 à 3 ; et
[A]⁻ représente un anion volumineux labile qui consiste en un complexe de coordination simple ayant une pluralité de radicaux lipophiles en coordination covalente avec, et faisant écran à, un noyau métallique ou métalloïdique central porteur de charge.

19. Procédé suivant la revendication 18, comprenant les étapes de mise en contact d'éthylène, seul ou en association avec d'autres oléfines et/ou d'autres monomères insaturés, avec la formulation de catalyseur dans un diluant de polymérisation convenable.

20. Procédé suivant la revendication 19, dans lequel la formulation de catalyseur est préparée séparément sous forme concentrée et est ajoutée au diluant de polymérisation, ou bien dans lequel les constituants sont préparés sous forme de solutions distinctes et sont ajoutés au diluant de polymérisation pour former le catalyseur in situ.

21. Procédé suivant la revendication 18, dans lequel le catalyseur est préparé par réaction des constituants et adsorption sur un support, ou bien en laissant les constituants réagir sur un support.

22. Procédé suivant la revendication 18, dans lequel la polymérisation est effectuée en phase liquide.

23. Procédé suivant l'une quelconque des revendications 18 à 22, dans lequel l'élément J du groupe hétéro-atomique servant de ligand consiste en azote, phosphore, oxygène ou soufre.

24. Procédé suivant la revendication 23, dans lequel B représente un groupe alkylène linéaire, ramifié ou cyclique ayant 1 à 6 atomes de carbone, un groupe sila-alkylène à substituant alkyle ayant 1 ou 2 atomes de silicium à la place d'atomes de carbone dans le pont ou un groupe silanylène à substituant Si₁-Si₂-alkyle.

25. Procédé suivant l'une quelconque des revendications 18 à 24 précédentes, dans lequel R' contient 1 à 20 atomes de carbone et est un radical alkyle droit ou ramifié, un radical hydrocarboné cyclique, un radical hydrocarboné cyclique à substituant alkyle, un radical aromatique ou un radical aromatique à substituant alkyle.

26. Procédé suivant l'une quelconque des revendications 18 à 25 précédentes, dans lequel l'anion contient des noyaux phényle substitués, de préférence un noyau phényle à substituant ortho-alkyle ou un anion perfluoro-substitué.

## Revendications (Revendications pour l'(les) Etat(s) contractant(s) suivant(s): ES)

1. Procédé pour la production d'une homo- ou copolyoléfine, comprenant la polymérisation d'un ou plusieurs monomères à insaturation oléfinique en présence d'une formulation de catalyseur comprenant la formule 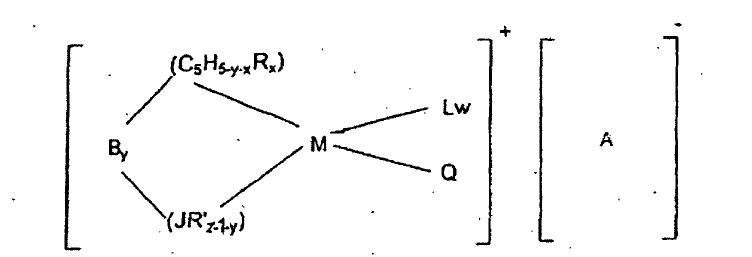 dans laquelle : M représente un métal de transition du Groupe IV-B choisi entre Zr, Hf et Ti et est à son état d'oxydation réel le plus élevé (+4, d° complexe) ; (C₅H_{5-y-x}Rₓ) représente un noyau cyclopentadiényle qui est substitué avec 0 à 4 groupes R, "x" est égal à 0, 1, 2, 3 ou 4 et désigne le degré de substitution, et chaque groupe R servant de substituant représente, indépendamment, un radical choisi dans le groupe consistant en radicaux hydrocarbyle en C₁ à C₂₀, dans lesquels un ou plusieurs atomes d'hydrogène sont remplacés par des atomes d'halogènes, radicaux métalloïdiques à substituants hydrocarbyle en C₁ à C₂₀ dans lesquels le métalloïde est choisi dans le Groupe IV-A du Tableau Périodique des Eléments, et radicaux halogène ; ou bien (C₅H_{5-y-x}Rₓ) représente un noyau cyclopentadiényle dans lequel deux groupes R adjacents sont joints en formant un noyau en C₄ à C₂₀, ce qui donne un ligand cyclopentadiényle polycyclique ;
(JR'_{z-1-y}) représente un ligand hétéro-atomique dans lequel J est un élément ayant un indice de coordination égal à 3 du Groupe V-A ou un élément ayant un indice de coordination égal à 2 du Groupe VI-A du Tableau Périodique des Eléments, et chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par des atomes d'halogènes, et "z" représente l'indice de coordination de l'élément J ;
Q représente, indépendamment, un radical hydrure, un radical hydrocarbyle en C₁ à C₅₀, un radical hydrocarbyle substitué dans lequel un ou plusieurs atomes d'hydrogène sont remplacés par un groupe électrophile, ou bien un radical métalloïdique à substituant hydrocarbyle en C₁ à C₅₀ dans lequel le métalloïde est choisi dans le Groupe IV-A du Tableau Périodique des Eléments, sous réserve que, lorsque n'importe quel radical Q représente un radical hydrocarbyle, ce radical Q soit différent de (C₅H_{5-y-x}Rₓ) ;
"y" est égal à 1 et B représente un groupe covalent de pontage contenant un élément du Groupe IV-A ou V-A ; L représente une base neutre de Lewis ; et "w" est un nombre de 0 à 3 ; et
[A]⁻ représente un anion volumineux labile qui consiste en un complexe de coordination simple ayant une pluralité de radicaux lipophiles en coordination covalente avec, et faisant écran à, un noyau métallique ou métalloïdique central porteur de charge.

2. Procédé suivant la revendication 1, comprenant les étapes de mise en contact d'éthylène, seul ou en association avec d'autres oléfines et/ou d'autres monomères insaturés, avec la formulation de catalyseur dans un diluant de polymérisation convenable.

3. Procédé suivant la revendication 2, dans lequel la formulation de catalyseur est préparée séparément sous forme concentrée et est ajoutée au diluant de polymérisation, ou bien dans lequel les constituants sont préparés sous forme de solutions distinctes et sont ajoutés au diluant de polymérisation pour former le catalyseur in situ.

4. Procédé suivant la revendication 1, dans lequel le catalyseur est préparé par réaction des constituants et adsorption sur un support, ou bien en laissant les constituants réagir sur un support.

5. Procédé suivant la revendication 1, dans lequel la polymérisation est effectuée en phase liquide.

6. Procédé suivant les revendications 2 et 5, dans lequel le monomère est l'éthylène seul, ou bien l'éthylène en association avec une alpha-oléfine ayant 3 à 18 atomes de carbone, soumis à la zone réactionnelle à des pressions de 0,0013 bar à 3445 bars, et la température réactionnelle est maintenue dans l'intervalle de -100°C à 300°C.

7. Procédé suivant l'une quelconque des revendications 1 à 6, dans lequel l'élément J du groupe hétéro-atomique servant de ligand consiste en azote, phosphore, oxygène ou soufre.

8. Procédé suivant la revendication 7, dans lequel B représente un groupe alkylène linéaire, ramifié ou cyclique ayant 1 à 6 atomes de carbone, un groupe sila-alkylène à substituant alkyle ayant 1 ou 2 atomes de silicium à la place d'atomes de carbone dans le pont ou un groupe silanylène à substituant Si₁-Si₂-alkyle.

9. Procédé suivant l'une quelconque des revendications 1 à 8 précédentes, dans lequel R' contient 1 à 20 atomes de carbone et est un radical alkyle droit ou ramifié, un radical hydrocarboné cyclique, un radical hydrocarboné cyclique à substituant alkyle, un radical aromatique ou un radical aromatique à substituant alkyle.

10. Procédé suivant l'une quelconque des revendications 1 à 9 précédentes, dans lequel l'anion contient des noyaux phényle substitués, de préférence un noyau phényle à substituant ortho-alkyle ou un anion perfluoro-substitué.

11. Procédé suivant l'une quelconque des revendications 1 à 10, dans lequel [A⁻] est représenté par la formule générale suivante :
[(M')^{m+}Q₁Q₂..Qₙ]^{d-}
dans laquelle M' représente un métal ou métalloïde choisi dans les Groupes sous-tendus par les Groupes V-B à V-A du Tableau Périodique des Eléments, c'est-à-dire les Groupes V-B, VI-B, VII-B, VIII, I-B, II-B, III-A, IV-A et V-A ;
Q₁ à Qₙ sont choisis, indépendamment, dans le groupe consistant en radicaux hydrure, radicaux dialkylamido, radicaux alcoolate et aryloxyde, radicaux hydrocarbyle et hydrocarbyle substitués et radicaux organométalloïdiques, et l'un quelconque, mais pas plus d'un, des radicaux Q₁ à Qₙ peut représenter un radical halogénure, les radicaux Q₁ à Qₙ restants étant choisis, indépendamment, parmi les radicaux précités ;
"m" est un nombre entier de 1 à 7 ;
"n" est un nombre entier de 2 à 8 ; et la différence n - m est égale à "d".
